(19) Europäisches Patentamt
European Patent Office
Office européen des brevets

(11) EP 1 838 013 A2

(12) EUROPEAN PATENT APPLICATION

(43) Date of publication:
26.09.2007 Bulletin 2007/39

(51) Int Cl.:
*H04B 7/26* (2006.01)

(21) Application number: 07005495.2

(22) Date of filing: 16.03.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 20.03.2006 US 384868

(71) Applicant: HARRIS CORPORATION
Melbourne, Florida 32919 (US)

(72) Inventors:
• Beadle, Edward R.
Melbourne, FL 32940 (US)
• Dishman, John F.
Melbourne, FL 32940 (US)

(74) Representative: Schmidt, Steffen
Wuesthoff & Wuesthoff
Patentanwälte
Schweigerstrasse 2
81541 München (DE)

(54) **Time/frequency recovery of a communication signal in a multi-beam configuration using a kinematic-based Kalman filter and providing a pseudo-ranging feature**

(57) A downlink time/frequency tracker for a receiver terminal, which may be mounted to a static platform on the earth, or to a dynamic platform, such as a ship. The tracker is operative to acquire and track time and frequency variations in time- and frequency-hopped synchronization signals from different data rate sources in a dynamic platform, such as a satellite. Characteristics of the Kalman filter are updated in accordance with data representative of timing error and frequency error measurements carried out on the synchronization signals, as well as data representative of local kinematic domain measurements carried out with respect to the receiver terminal. The Kalman filter outputs minimum mean square error estimates of timing and frequency errors in the receiver terminal's demodulator clock. These error estimates are used to synchronize the demodulator's clock with the clock embedded in the downlink signal, so as to enable demodulation and recovery of data.

FIG. 1
(PRIOR ART)

EP 1 838 013 A2

**Description**

The present invention relates in general to communication systems and subsystems thereof, where either the transmitter terminal and/or receiver terminal may be a mobile platform, with possibly high dynamic motion and possibly non-zero and/or non-constant acceleration between the transmitter terminal and the receiver terminal. It is particularly directed to a communication system where in each of the transmitter and receiver terminals has a single master oscillator reference that is used to provide all the transmitter and receiver terminal clocks, oscillators, and epochs respectively. The invention provides time recovery and frequency recovery of a time and frequency hopped transmitted data signal in the receiver terminal, for the purpose of properly demodulating the information content of the signal, using equivalent kinematic variables, there being an equivalence between the kinematic variables of range, velocity, and acceleration and typical variables in communication signal recovery of phase, frequency and frequency rate of change, respectively. The phrase "time recovery" is used to refer to the "constant phase" offset in a selected timing epoch or clock, while the phrase "frequency recovery" is used to refer to the possible constant time-varying rate-of-change component of sequential timing epochs.

The receiver terminal uses in-band communication signals conveyed thereto from the transmitter terminal over an initially coarsely established communication link. Successive measurements using this link recursively maintain or improve the level of time/frequency synchronization at the receiver terminal to the received signal in a reference frame containing (possibly) containing relative motion. Improved levels of synchronization support corresponding higher data rates. The improvement in synchronization level is accomplished through the use of timing error and frequency error measurements carried out on time- and frequency-hopped synchronization signals, and supplemented by kinematic domain (accelerometer) measurements (if available) at the receiver terminal. The time and frequency errors are scaled to correspond to pseudo-range and pseudo-velocity kinematic variables for use by a Kalman filter to produce, at discrete intervals, minimum mean square error (MMSE) estimates of prevailing timing and frequency errors in the receiver terminal for the purpose of updating demodulating hardware which, in turn, recovers the information content of the transmitted signal.

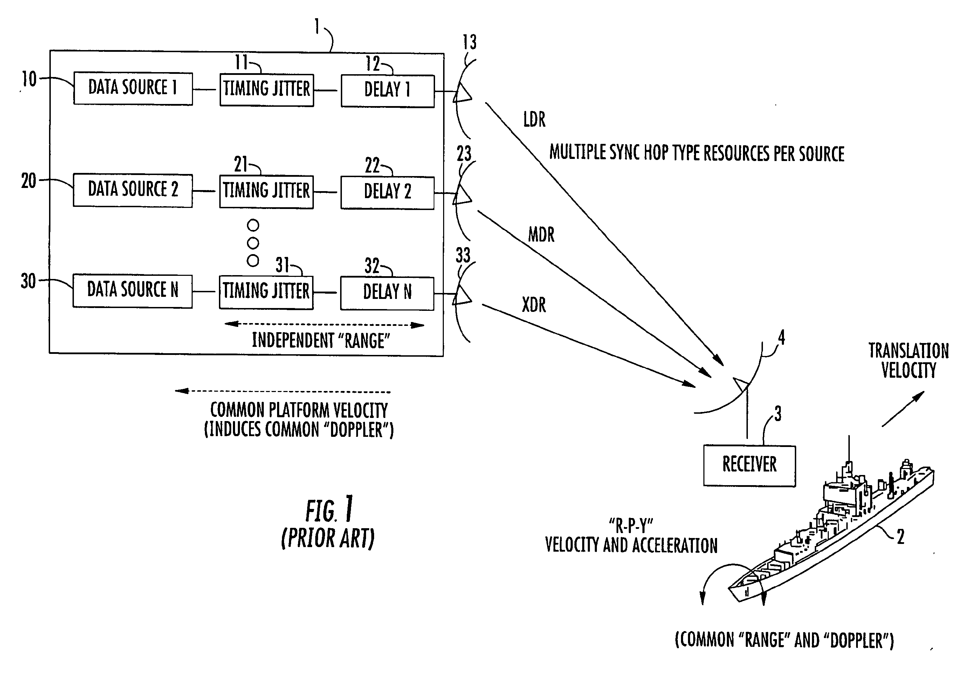

Every communication system requires some level of time and frequency synchronization between the transmitter and receiver. It is beneficial to minimize link resources (e.g., power, bandwidth, time slots, etc.) for synchronization so that link resources for information transfer are maximized. As a non-limiting example, consider a multiple data source satellite, such as that shown at 1 in Figure 1, containing respectively different data rate sources. For the sake of simplification, satellite 1 is shown as containing three data rate sources 10, 20 and 30, which will be referred to individually as L, M, and X. The fact that they are all supported by a common transmit platform (satellite 1) means that movement of the transmitter terminal (e.g., satellite 1) introduces a substantially common range (timing) error, as well as a common velocity (frequency) error, into each source's forward link signal. There are somewhat independent payload timing errors (i.e., jitters 11, 21, 31 and delays or offsets 12, 22 and 33) between the L, M, and X signals, since they are processed in slightly different manners prior to arriving at their transmit apertures (antennas 13, 23 and 33). In terms of frequency offset all the transmit signals undergo a common Doppler shift, which is governed by the motion of the transmit platform 1 relative to receive platform 2. The Doppler shift for the individual L, M, and X signals is dependent on the transmitter hop frequency for each signal and the relative line of sight (LOS) velocity of the transmitter and receiver platforms. Hence, for frequency-hopped signals, even where the system has a fixed non-zero LOS velocity, the signals will appear to have time-varying Doppler, which greatly complicates phase locked loop (PLL) designs, as will be explained below. Further, if there is acceleration along the LOS, high-order PLLs are needed; these are known to be of limited utility in practical systems due to difficulty in design and stabilization.

In the present satellite communication (SATCOM) downlink example of Figure 1, the receiver site 3 may consist of either a static receiver terminal, having one or more associated antennas 4 supported by a structure that is affixed to the earth, or a dynamic receiver terminal - for example, a shipboard receiver terminal having an antenna structure mounted to a mast of a ship. In order for any one of the different types of receiver terminals referenced above to receive and recover data communication signals from a satellite downlink, it is necessary that the receiver terminal be provided some knowledge of the downlink signal it is to acquire. In the present case, the receiver terminal 3 is provided with nominal knowledge of the timing and transmit frequency for a synchronization pulse for a given remote data source, by an assumed ancillary means and a knowledge of the pre-planned time/frequency hopping patterns (e.g., TRANSEC). Time/frequency hop patterns or plans are associated with respective users (i.e., signals) of the satellite, and are made different by the transmission system between one or more other users of the satellite, in order to avoid the possibility of mutual interference. Having knowledge of the time and frequency hopping plan allows the downlink terminal to know nominally temporally when, and at what frequency, to look for one or more synchronization hops, which is the resource that is exploited by the receiver terminal to make time and frequency error measurements, and adjust the receiver terminal time and frequency control, per communication signal, so that data may be recovered. In a typical application, a set of synchronization hops per signal may be reserved in the link; for the present example, there would be three sets of synchronization hops defined (i.e., coarse, fine and extra-fine) per signal source (i.e., the L, M, and X data sources 10, 20 and 30, respectively). As an obvious extension, sync hops may be shared between signals.

For applications, such as satellite downlinks, the orbital path of the satellite is governed by well-known physics, which allows the receiver terminal's associated antenna positioning subsystem to effectively continuously maintain the boresight of the receiver terminal antenna 4 pointed at the satellites. In other applications, such as where the transmitter terminal has a random trajectory, the system can be augmented with spatial tracking, such as the well-known conical scan or pseudo-monopulse approaches. In still other cases, for example, fixed location transmit stations (e.g., microwave or cellular towers), the location of the transmitter terminal can be known a-priori, so that the receiver may remain "pointed" at the transmitter as it executes a kinematically defined trajectory. In the present description, it will be assumed that the receiver subsystem, as in all well-designed systems, has some spatial tracking for maintaining the transmitter within the receiver field-of-view. With knowledge to the direction of the incoming signal, the pseudo-range maintained in the receiver terminal provides a good source of data for location or ranging the transmitter. Pseudo range, as will be described, is derived from the initial nominal range knowledge available from ancillary means, and continually updated with range error measurements derived from time error measurements made from the synchronization resources.

Additionally, the receiver terminal 3 must account for relative LOS motion between itself and the (assumed at rest) satellite 1, especially where the receiver terminal is mounted on a dynamic platform such as a ship 2. The relative LOS motion manifests itself as time and frequency errors or offsets in the downlink signal that is to be tracked. To account for this motion, the receiver terminal may be supplied with a number of communication and position/motion parameters associated with the satellite (e.g., ephemeris measurements or ephemeris extrapolations) and/or the receiver terminal itself (e.g., shipboard navigation data), that are intended to enable the receiver terminal to make timing and frequency corrections, so that a respective downlink signal may be demodulated and data recovered. However, using a ship's navigation system, to compute corrections that compensate for the range (timing) and velocity (frequency) errors in the downlink signal induced by the movement of the ship, has some serious shortcomings.

One shortcoming of this approach for correcting for timing and frequency errors is the potential absolute and time-varying latency in receiving the ship's navigation data. Although this latency may not be a problem for stably controlling the movement of the ship - where things happen relatively slowly - for timing/frequency acquisition and tracking, such navigation system-based motion parameter data must be available to the receiver terminal effectively "instantaneously", in order to avoid negatively impacting the receiver hardware and software complexity. Similarly, even the use the global positioning system would be inadequate, not to mention the negative impact on receiver complexity. For communication purposes, the data required for time and frequency corrections must be exceedingly accurate, especially if the data source to be tracked has a relatively high data rate (i.e., megabits/second).

As pointed out above, in the non-limiting example of a satellite downlink-to-terrestrial receiver terminal communication system of Figure 1, the satellite platform I supports a plurality (three in the illustrated example) of user data sources 10 (L), 20 (M) and 30 (X), outputs of which are intended for transmission to a receiving antenna 4 of an earth terminal 3. In the illustrated example, the earth terminal is mobile, being diagrammatically illustrated as a surface ship 2, having mounted thereon the downlink receiver terminal 3 and associated antenna 4, the boresight of which is aimed at the satellite, by means of an associated antenna-positioning subsystem, not shown. User data sources 10, 20 and 30, within the satellite 1, have a common timebase and frequency reference provided by the host platform. There is a common time delay manifested as a "range delay", which corresponds to the distance or range from the receiver terminal 3 to the satellite 1. In addition, each data source 10, 20, and 30 has its own independent additional pseudo-range (distance from the downlink earth terminal), which is incurred by differing time delays to their respective apertures on the host platform.

The additional pseudo-range component is comprised of primarily two additive components. The first is independent time jitter, typically a few tens to hundreds of nanoseconds, for each of the data sources, which manifests itself as pseudo-range jitter of a ~ tens of meters in the kinematic domain. The second is also a source-dependent time delay (e.g., aperture delay due to cabling), manifested as a static aperture dependent pseudo-range delay. These parameters are represented in Figure 1 as respective amounts of associated timing jitter 11,21, and 31, and aperture propagation delay 12, 22 and 23 in the signal transport paths (as may be associated with amplifier delay, cable delay, and aperture delay, for example), that couple respective data sources 10, 20 and 30 to associated downlink transmission antennas 13, 23 and 33. In comparison to the common time delay (i.e., range delay) between the transmit platform (satellite) 1 and the receive platform (ship) 2, the additional pseudo-range components are negligible for ranging applications.

In a satellite downlink communication system, such as that shown in Figure 1, the synchronization hops for each source will arrive at the receiver terminal at a rate dependent on the source type and in a non-periodic manner. For example, the L source synchronization hops may arrive at an average rate of say 1.4 times the M source synchronization hops, and the inter-pulse arrival times of the L, M, and X streams, respectively, may be non-constant due to time-hopping. Unfortunately, a traditional PLL-based design, such as may be commonly used in analog, digital or hybrid form, for the purposes of deriving timing and frequency needed for demodulation (References: F. Gardner, Phaselock Techniques, 2nd Edition, Wiley, 1979, H. Meyr and G. Ascheid, Synchronization in Digital Communications, Vol 1, Wiley, 1990), cannot readily accommodate such measurement sequence variation. Standard PLL approaches used in timing and frequency recovery will fail when applied to time and frequency hopped sync signals for a number of reasons.

First, the sync signal is time-hopped in an a-periodic manner, so that it has an irregular arrival rate, and therefore does not readily lend itself to be acquired by a PLL. PLLs are intended to operate with periodic signals corrupted by jitter and/or phase noise, and the extremes of the time hop pattern would have a large negative impact on the achievable performance and loop design. Another problem with using a PLL-based system is frequency hopping, which covers large hop bandwidth (e.g., 1 GHz) broken into a multiplicity of narrower channels. It becomes a difficult, if not impossible, design task, to maintain suitable lock performance for high data communications (e.g., maintain track with extremely small tracking error) with potentially large frequency step errors presented to the phase detector and control loop. A PLL-based approach would have a significant negative impact on system cost and complexity.

However, a more difficult problem facing a PLL approach is that of accelerating phase. This is incurred because there is an acceleration component along the transmit-receiver LOS. In such a case, third order PLLs are necessary (References: F. Gardner, Phaselock Techniques, 2nd Edition, Wiley, 1979). Third order PLLs present still more significant challenges in practical applications. These challenges include maintaining a stable operation while meeting system performance requirements for tracking performance. While various PLL architectures are described in the literature (References: F. Gardner, Phaselock Techniques, 2nd Edition, Wiley, 1979, H. Meyr and G. Ascheid, Synchronization in Digital Communications, Vol 1, Wiley, 1990), any PLL design generally requires a trade-off between the acquisition and tracking modes of operation. Moreover, some (typically ad-hoc) mechanism is necessary for selecting the transition between acquisition and track modes, which often necessitates dynamically adjusting the loop bandwidth and significantly aiding the initial tracking process ("acquisition" in PLL terminology). The former technique has inherent drawbacks, such as increased design complexity and potential for transients or lock-loss during switching, while the latter also has drawbacks - most notably, increased complexity in the design of the sub-system to aid the PLL. It will be readily appreciated, therefore, that a PLL, particularly a third order PLL, which is difficult to design and keep stable, is not an attractive candidate for acquiring and tracking a synchronization signals, the time and frequency of which are a-periodically hopped.

Kalman Filters have been suggested for very limited use, e.g., in the track state of a communication link, since it has been demonstrated that the track state (References: P. Chaichanavong, B. Marcus, J. Campelo de Souza, R. New, B. Wilson, "Kalman Filtering Applied to Timing Recovery in Tracking Mode", Website: nd.edu/~mtns/./papers/13997_4.pdf, P. Driessen, "DPLL Bit Synchronizer with Rapid Acquistion Using Adaptive Kalman Filtering Techniques", IEEE Trans. On Comm, Vol. 42, No. 9, Sept. 1994.) of a Kalman Filter can be equated with that of a second order PLL, when set up in a limited specific configuration (i.e., non-accelerating environments). However, the prior art literature does not address any exploitation of the relationship between communication synchronization parameters (time and frequency offsets) and kinematic variables (offset in time/distance between source and receiver, or frequency offset, e.g., rate of change of range difference between source and receiver), which is the basic problem in the satellite downlink environment, where the time difference and range change rate are unknown variables.

Most Kalman Filter-based schemes employed for communication systems are described in the literature as using essentially non-kinematic approaches, and only address the (PLL) tracking state. An example of such a non-kinematic application is a disc head read system with partial response maximum likelihood (PRML) channels (Reference: P. Chaichanavong, B. Marcus, J. Campelo de Souza, R. New, B. Wilson, "Kalman Filtering Applied to Timing Recovery in Tracking Mode", Website: nd.edu/~mtns/./papers/13997_4.pdf,), where a disc head is traveling at an angular velocity that is as constant as the drive motor can provide, in a fixed geometry, fixed format, fixed time of arrival of sync pulse environment (e.g., as static as the manufacturer can make it). Kalman filters used for PRML channels assume that acquisition has been accomplished, and merely try to track a small perturbation about a steady state condition. Such a static disc head read system is totally different from a dynamic satellite downlink environment, where the times of arrivals and frequencies of signals from the satellite are highly dynamic (pseudo random), in order to prevent unauthorized usurpers from gaining access to the link. In addition, a static system does not exploit kinematic variables (which its design is intended to avoid) as synchronization parameters.

In addition to higher order PLL-based proposals for timing and frequency systems, and limited use Kalman Filter methodologies, described above, it has also been proposed to use non-linear 'Kalman-like' techniques, containing banks of matched non-linear filters - one for each possible frequency - that are highly stylized and matched to individual problems. As a non-limiting example, attention may be directed to the article entitled: "Carrier Tracking and Symbol Timing in Highly Accelerative Mobile Communications," by Sousa and Leitao, Proc. VTS 53rd Vechicular Technology Conference, VTC 2001, Vol 4, pp. 2998-3002, May 2001. This article describes a technique for recovering symbol timing and carrier (but no ranging solution), using multiple non-linear filters, in the context of a Bayesian maximum a-posterior (MAP) approach. Such a filtering scheme is typically designed to look for a peak correlation, in order to locate a time/frequency error. These types of systems will not work in practice for the time and frequency acquisition and tracking problem addressed here, as their hardware implementations would occupy too large an area of semiconductor real estate to fit within a few ASICs, and would consume an extraordinary amount of power. Moreover, if implemented digitally, their associated processors could not 'crunch data' fast enough to realize a viable solution for data rates of practical interest.

In accordance with the invention, the above-discussed inability of a conventional, PLL-based receiver terminal to successfully acquire and track timing and frequency offsets, associated with relative acceleration between a remote transmit site, such as a satellite, and a receive terminal, which may reside in an essentially static, shore-based environment, or in a kinematic environment, such as a surface ship or submarine, is effectively obviated by means of a new and improved, Kalman filter-based time/frequency tracker (TFT) module, operating in a kinematic domain (i.e., range, velocity and acceleration). The TFT module of the present invention uses a Kalman filter, whose state-space description involves only kinematic domain variables, in particular, line-of-sight pseudo-range, line-of-velocity, and line-of-sight acceleration, herein after referred to simply as range, velocity, and acceleration. The TFT module of the invention will support the recovery of a plurality of (e.g., three) communication signals that may operate simultaneously.

The Kalman filter forms the computational core of the TFT module. Other components necessary for the TFT module to operate include a properly designed DEMOD, a track state manager (TSM) (e.g., synchronization level monitor), a frequency error fusion subsystem (FEFS), and a time/frequency error detection subsystem (TFEDS). It will be assumed that there is a properly designed demodulation (DEMOD) system preceding the Kalman-based TFT subsystem, which means that the DEMOD can be relied upon for measurements of time and frequency errors to be used by the TFT module. Various instantiations of the Kalman filter to be detailed below are based on "kinematic equivalent" parameters. "Kinematic equivalence" means that range errors are scaled time errors, where the conversion is given by $R_{err} = C\tau_{err}$, where the constant c is the speed of light. The velocity errors are scaled frequency errors, where the conversion is given by $\dfrac{cf_{err}}{f_o}$, where $f_o$ is the nominal (i.e., rest frame) frequency hop transmitted. Acceleration (velocity time rate of change) measurements are made directly in the kinematic domain and, as such, do not require conversions. The TFT module supplies the appropriate corrections fed back to the DEMOD, again exploiting kinematic domain equivalence, but for the purpose of appropriately setting time and frequency corrections in the DEMOD, in order to continually improve the level of synchronization and react to disturbances in time/frequency parameters.

The entire TFT module is preferably instantiated as a software module, installable in a programmable receiver terminal. However, at the designer's discretion, one or more elements may be instantiated in hardware, if it is beneficial in a particular application. The entire receiver terminal may be mounted to a static platform fixed on the earth, or on a dynamic platform, such as a ship, airplane or car. The TFT module is operative to maintain the receiver's timing epochs and oscillators synchronized to the incoming communication signal, as measured by the receiver. The incoming signal is time-and-frequency-hopped and contains a number of synchronization hops.

The time and frequency of arrival of the transmitted signal is coarsely known to the receiver under the assumption of zero relative motion along the line-of-sight (LOS). The level of knowledge is sufficient for a coarse time and frequency lock to the received signal, but insufficient to support meaningful data rates, say more than a few kilobits/second. The level of time and frequency synchronization must be improved, as it is an object of this invention to reliably support megabit/second class data transfer, where the transmitter and/or receiver may be executing highly dynamic motion for the duration of a transmission.

The complication that occurs in communication systems of practical interest (e.g., multi-media mobile, satellite, or ad hoc data networks), compounding the typically necessary time and frequency recovery, is that the receiver and/or transmitter may have significant motion components along the LOS, which causes the physical phenomenon of time dilation/contraction. This phenomenon is most often referred to as "Doppler". The motion affects the time and frequency measured in the receiver's rest frame (i.e., assuming a kinematic static receiver) relative to the transmitter's rest frame (i.e., the transmitter is kinematically static). The transmitter rest frame for the purposes of the invention is considered to be valid, and all signal parameters (e.g., time epochs and frequencies) are measured relative to the transmitter rest frame.

It can be reasonably expected the relative LOS motion of the communicating stations possess a non-zero and non-constant acceleration characteristic. Proper recovery of the data signal requires the time dilation/contraction and associated frequency effects (i.e., commonly called Doppler) to be tracked by the receiver over the range of motion, as a function of time, experienced in the system. The LOS motion is unknown to the receiver a-priori.

Novel features and benefits of the TFT module of the present invention include, but are not limited to the following:

1 - operating with time and frequency hopped signals; 2 - measurement fusion of common frequency errors; 3 - operating in an environment containing acceleration, which may be time varying; 4 - maintaining time/frequency lock on multiple simultaneous users in different sync states; 5 - multi-level lock indicator; 6 - dynamic selection of synchronization resources; and 7 - automatically providing accurate ranging data to transmitter along LOS.

The kinematic domain operation of the TFT module's Kalman filter enables the tracking processor to continuously track, with high accuracy, time and frequency variations in one or more hopped synchronization signals, that are conveyed within pseudo randomly occurring time slots of one or more forward link signals from the transmitter. The Kalman filter is thereby able to provide the basis for synchronization all timing epochs and frequencies needed to demodulate the received signals in a multi-user satellite communication system.

For purposes of providing a non-limiting, but illustrative example, the transmitter will be described as a satellite containing three independent user data sources L, M and X and may be of different data rates. The satellite has some downlink communication path to the receiver terminal. The receive terminal is preferably augmented with a kinematic measurement subsystem, such as an accelerometer, which may be coupled with the receiver terminal's antenna to provide a measure of LOS acceleration. As an alternative to measuring acceleration directly, acceleration may be derived indirectly from ancillary measuring devices or mathematical operations, but likely at decreased accuracy. In cases where there is no acceleration measurement available, or suitable quality, the invention may be configured in a reduced state configuration in which the acceleration state is ignored. There is a performance degradation associated with reducing the state when the environment, in truth, has non-negligible LOS acceleration components. However, the reduced state configuration can recover a measure of performance by "cycling" the system at a faster rate.

The primary means of updating kinematic information in the Kalman filter is an error detection subsystem. In this subsystem an error detection system is allocated per signal (i.e., N= number of signals times number of different sync hop types, e.g., N=3x3=9). However, in other applications it may be possible to time-share common processing components.

The timing-error subsystem measures timing errors induced primarily by variations in the distance or range between the satellite and the receiver terminal relative the current time epochs maintained in the receiver. However, other static and jitter components, characteristic to each individual signal, impact the instantaneous time error (i.e., additional pseudo-range) measured in the receiving system. These are also measured as indistinguishable additive components to the bulk range delay, common to all signals, between the satellite and receiver. In practice, the timing error subsystem measures difference between the expected time-of-arrival of a sync epoch and the actual time-of-arrival. The time-of-arrival error is measured using a leading edge-to-leading edge measurement.

The frequency-error subsystem measures the velocity associated with the rate of change in the pseudo-range (e.g., pseudo-velocity) from the receiver terminal to the satellite. In the case of a dynamic terminal platform, such as a surface ship or submarine, this velocity occurs at some measurable rate, and manifests itself as a frequency error (i.e., frequency offset) from the expected nominal receive frequency for a signal at a given time. Thus, the instantaneous frequency error includes the effects of relative motion and offsets relative to the frequencies currently maintained in the receiver. The frequency errors are common among all independent users, due to the common motion experienced by all signals in the transmitter and receiver platforms. The TFT module of the invention exploits the availability of multiple independent measurements, to extract a more accurate and precise frequency error for all signals. To accomplish this the TFT module includes a novel frequency error fusion subsystem.

This fusion operator performs maximum likelihood (ML)-based fusion of frequency error data assuming a typical zero-mean Gaussian error model. The variance of the frequency error measurement for each signal is dependent on the exact instantiation of the frequency error detector selected. In accordance with the instantiation described herein, the ML-fusion of frequency errors is carried out by first converting the frequency errors to pseudo-velocity errors, and ML-fusing the data into a single pseudo-velocity error. Alternatively, the frequency errors may be fused first, followed by converting the resulting single frequency error into a pseudo-velocity error. The results are identical, the terms frequency fusion and velocity fusion are used interchangeably.

The main benefit of fusion is that it reduces the time to achieve small steady-state tracking errors. The fused frequency error data is provided as a frequency error input to the TFT module's Kalman filter. As in the case of detected timing error inputs, the Kalman filter accepts these measurements and converts the time and frequency errors into equivalent pseudo-range and pseudo-velocity, by scaling, as explained previously. Between measurement cycles, the Kalman filter extrapolates pseudo-range, pseudo-velocity and acceleration state variables, so that, when measurement updates are available, the Kalman filter will update its estimates to the MMSE optimum value. The filter state variables of pseudo-range, pseudo-velocity, and acceleration are directly converted to timing and frequency error control signals, that are used to update the DEMOD hardware, in a feedback configuration, which operates to drive frequency and time errors to zero for each signal, and thereby to provide optimum utility of the channel (i.e., low bit error rate). The control signals are derived by using linear blending, as prescribed by the Kalman filter equations, of the measured state variables (i.e., pseudo-range, pseudo-velocity, and acceleration) and the predicted measurement of the state variables at a given time, and the current state estimate maintained by the Kalman filter.

A track state manager sub-system is also included. This sub-system is operative to constantly monitor the time and frequency detector outputs for the synchronization resources (i.e., particular hops) selected, and provides a multi-level lock indication per signal, termed "track states". The track state manager subsystem use nine levels (or track states), with state one being the least accurate and state nine being the most accurate. As will be described, the track state selected for any user will be governed by the parameter in the largest error (i.e., time or frequency). Other applications may find it beneficial to use greater or fewer states. An advantage of multiple track states is that low data rate services can be initiated and sustained, once the system achieves low track state levels, which typically happens early in the process. Conversely, higher data rate services require higher levels of synchronization (i.e., lower time/frequency errors or in other words, higher track states) to sustain throughput which can take longer to achieve. A multi-level lock indicator is also used to determine when a beneficial transition to alternative synchronization resources in the link per user is advisable. For example track states one and two use the coarsest synchronization hops, track states three through seven use finer synchronization hops, and track states eight and nine use the finest synchronization hops for measurement of time and frequency errors. The multi-level lock indicator provides an output indicating the current level of synchronization (i.e., track state) per user.

Initially, the tracking system is "seeded" with respective values of pseudo-range, pseudo-velocity, and acceleration parameters in the Kalman filter algorithm, which are coarsely known from available information. This initial state is track state one. The system acquires better track states (i.e., two through nine), as the monitored time and frequency errors drop below defined values on a "per state" basis. Conversely, if the monitored errors increase above certain levels, then the track state manager will correspondingly indicate a degraded track state lock indication. The error levels for the lock indication are arbitrary, and depend only on error tolerance. An important feature of the invention is that, as the track state improves/degrades, the synchronization resources can be selected commensurate with the synchronization level. This is beneficial since processing coarse hops (i.e., track state one and two) requires considerably less receiving system resources (e.g., computation, power, etc.) than processing the finest synchronization hops.

The architecture of the satellite downlink receiver terminal includes a front end demodulator and satellite type-terminal platform-dependent Kalman filter-based time/frequency tracker (TFT) module of the invention. Each embodiment of the TFT module uses receiver timing and frequency errors derived from downlink synchronization hop signals, the times of transmission and frequencies of which are a-periodically or pseudo randomly varied or hopped within one or more (typically, multiple) downlink beams transmitted from the satellite and preferably terminal-associated kinematic data measurements, such as LOS acceleration. The timing and frequency error measurements and the kinematic data are combined into data vectors, that are used to adaptively update the receiver's Kalman filter, which then outputs kinematic state (time/frequency) estimates to a kinematic state estimate processor. This processor uses the Kalman filter output data to adjust the receiver terminal's internal master clock from which all time and frequency references in the receiver are derived (e.g., the sampling clock for the terminal processor's associated analog-to-digital converter and radio-frequency downconverters within the demodulator), thereby allowing demodulation and recovery of data.

To this end, input signals from a satellite downlink-monitoring antenna, associated low noise amplifier and downconverter subsystem, are coupled to a front end, programmable demodulator (with TRANSEC) subsystem. Assumed to be available is an antenna positioning subsystem that continuously maintains the boresight of the antenna 'pointed' in the direction of the electromagnetic propagation of the monitored downlink beam, which travels over a curved path through the atmosphere, rather than in a straight line to the satellite. The demodulator's associated TRANSEC is programmed with knowledge of the parameters of the time and frequency-hopped synchronization pulse of interest. Having knowledge of the frequency hopping plan allows the downlink receiver terminal to know when to look for one or more 'synchronization' hops, within pseudo randomly selected times slots of a frame of data of the monitored downlink signal, where a respective synchronization hop pattern is associated with a respective user of the satellite, whose data rate and satellite antenna aperture are independent of those of one or more other users of the satellite, in order to avoid the possibility of mutual interference.

Selected data frames of the downlink signal stream contain such synchronization hops, from which time and frequency measurements may be derived. As a non-limiting example, each data frame may contain three-hundred time slots. The three-hundred time slots of a respective frame may be sub-divided into ten sub-frames (SF's), each of which may be nominally thirty time slots in length. Synchronization hops for the three independent available signals (e.g., L, M, X) are selectively inserted into the time slots of a data frame in a pseudo random manner; also, multiple synchronization hops for the same signal type may be inserted into a single sub-frame. Thus, sync hops can occur in any combination or order within a sub-frame.

The front end demodulator subsystem of the receiver terminal is coupled to receive time and frequency adjustment commands from a kinematic state estimate processor, to adjust or refine the tuning of the demodulator's sampling clock, in a manner that enables it to track time and frequency variations that are imposed on the downlink communication signal from a variety of link disturbances (e.g., kinematic motion, electronic drift, etc.). The update cycle of the Kalman filter algorithm is set at a value that is fast enough (i.e., nominally 1.5 ms), so as to provide robustness against non-linear dynamics, as are typically associated with multiple forms of motion (roll, pitch, yaw and heave) of a ship. Using a sufficiently high update frequency obviates the need for an "extended" Kalman filter, which is often employed to handle non-linear dynamical systems. However, "extended" Kalman filter and other non-linear model variants all suffer from divergence issues, due to mathematical linearization operations, whereas as the Kalman-filter (Reference: R. Brown, P. Hwang Introduction to Random Signals and Applied Kalman Filtering, 2nd, Wiley, 1992) algorithm avoids such linearization computations, resulting in lower computational complexity and robust performance.

The kinematic state estimate processor receives kinematic state estimates generated by a Kalman filter operator, which has an architecture and coefficient update methodology, that use time and frequency errors derived from received time- and frequency-hopped synchronization pulses, in combination with (accelerometer-sourced if available) kinematic measurements representative of motion, and which produce perturbations in the times of arrival and frequencies of the hopped sync pulses, to yield time and frequency correction values. These time and frequency correction values are used by the kinematic state estimate processor to generate the time and frequency adjustment commands its supplies to the demodulator, for refining the frequency converter tuning and times of transitions in its sampling clocks.

Configuration and operational characteristics of the Kalman filter operator are supplied by a control, or track state manager/supervisor processor, so as to enable the Kalman filter to operate with a selected one of a plurality of satellite-receiver terminal combinations (e.g., a total of eight combinations that may be realized from two satellite types and four earth terminal types). The track state processor is also coupled to receive kinematic state estimates produced by the Kalman filter operator. The track state processor monitors these estimates to determine whether the performance of the Kalman filter operator is acceptable. If the monitored estimates produced by the Kalman filter operator indicate that the error is becoming too large, the track state processor generates commands that effectively reduce the track state to a lower grade of tracking (lower data rate sync hop) - opening up the time and frequency error measurements - so that the system may recapture sync.

The front end demodulator outputs data representative of the sampling of detected time and frequency-hopped synchronization pulses to a timing and frequency error detection subsystem, configuration commands and operational parameters for which, as well as those for a frequency error fusion operator, are provided by the track state processor. The timing and frequency error detection subsystem contains a plurality of timing error detectors and a plurality of frequency error detectors. A respective timing error detector is associated with a particular synchronization hop pulse (e.g., coarse, fine, finest) and a signal or user (e.g., one of three), and is operative to conduct timing error measurements for the specified signal and hop type, with the value of a timing error measurement for that signal and sync hop pulse being coupled to the Kalman filter operator. A respective frequency error detector, operates similarly. However, the value of each frequency error measurement is coupled to the frequency error fusion operator. The frequency error fusion operator performs maximum likelihood (ML)-based fusion of frequency (velocity) measurement data, in order to exploit the availability, from multiple sensors, of information that represents the same types of measurements (e.g., common Doppler), and is assumed to exhibit Gaussian errors.

For purposes of illustrating its use with a variety of satellite downlink communication system configurations, two respective embodiments of the TFT and its Kalman filter operator are detailed below. The first embodiment is a reduced state Kalman system; the second embodiment is a full state Kalman system. The first embodiment has utility where acceleration can be effectively ignored over the periods used for updating the Kalman estimates.

In the TFT module of both embodiments the Kalman filter is a continuous time random walk model. The two types of random walks described below are velocity (i.e., the first embodiment) and acceleration (i.e., the second embodiment). A velocity random walk model dictates a white noise acceleration process and is mainly suitable for situations where acceleration measurements are unavailable. An acceleration random walk model dictates a white noise jerk process and is mainly suitable for situations where acceleration measurements are available. A random walk-based Kalman filter can well-model the true state evolution dynamic of a non-linear system as a function of time, when the update cycle is small (e.g., 1.5 ms) with respect the relative motion parameter periods (e.g., ~ 1 - 10 seconds). Also incumbent is the arrival of measurement data, say the time and frequency errors, at a rate preferably no greater than the motion period of interest.

In this manner, the measurement sample rate and system update/prediction rate are high enough to adequately follow the non-linear (true) state evolution (which, in discrete time, is a series of levels) with a random walk-based Kalman filter (e.g., also a series of piece-wise constant levels). Further, the process noise level employed in the filter model must be selected to adequately compensate for the difference between the true (nonlinear) filter state and state estimated from the random walk-based filter. Typically, this requires over-bounding the motion (i.e., high variance) to provide a coarse fit to a Gaussian error statistic. Although this may over-penalize "noise" - sacrificing steady state performance - this modeling approach will make most state jumps appear as less than 2-sigma events (e.g., coarsely following Gaussian statistical models).

A respective TFT module's Kalman filter is operative to estimate the current state in the minimum mean square error (MMSE) sense, using all previous data and system parameters (e.g., state evolution, measurement, driving noise and measurement noise). The previous data is not retained in memory, but its influence is retained as the Kalman-filter structure is recursive.

The two random walk model instantiations of the Kalman filter to be detailed below (a random walk 'acceleration'-based Kalman filter, and a random walk 'velocity'-based Kalman filter) are based on "kinematic equivalent" parameters. This means that range errors are scaled time errors, velocity errors are scaled frequency errors, and acceleration errors are scaled frequency rate errors as explained above.

For the random walk 'acceleration'-based Kalman filter embodiment, hop-to-hop timing jitter has non-zero second order finite differences, and the time-varying character of the jitter can be accounted for as part of the white noise process driving the state transition (e.g., jerk noise component for random walk acceleration). In addition, in the random walk acceleration-based filter, the (continuous time) acceleration state is dominated by terminal motion, and the satellite acceleration is negligible.

For the random walk 'velocity'-based Kalman filter embodiment, hop-to-hop timing jitter has non-zero first order finite differences, and the time-varying character of the jitter can be accounted for as part of the white noise process driving the state transition (e.g., acceleration noise component for random walk acceleration). Also, in a random walk velocity application (e.g., shore), the (continuous time) acceleration state is well modeled by white noise.

Due to the varieties of communication systems conceivable, there are many possible time/frequency measurement combinations that can occur in any given 1.5 ms cycle, since up to three signals can be simultaneously active, there are potentially up to three individual "range state" measurements, three individual "velocity state" measurements (which will be fused), and one acceleration measurement (if available). Although, in most instances, the range and velocity state information is measured together; different sync hops may be used for time and frequency (range and velocity) measurements, in order to exploit the characteristics of the sync hops available. For example, a signal may be in a relatively high track state, for example track state seven, but, in demodulation, the modulation type is robust to frequency error. In this case, one might choose to make frequency measurements using coarse sync hops and timing measurements from fine sync hops. The usage of coarse sync hops in this context will reduce consumption of receiver resources (e.g., power, computation, etc.).

The measurement processing takes these variations into account, by assembling the proper measurement matrix per measurement loop iteration (i.e., every 1.5 ms). A reduction in the complexity of the Kalman filter is realized by performing maximum likelihood (ML) rule-based velocity (frequency) state fusion with a pseudo sub-frame, where all velocity measurements are fused by the frequency error fusion operator into a single velocity measurement.

The basic implementation of the Kalman filter core that is employed in each of the embodiments of the time/frequency tracker (TFT) module of the present invention is generally as set forth below. In this generalized implementation (the full state Kalman filter based TFT), it is assumed that L,M and X signals may be periodically turned on and off, and that acceleration measurements are available. The system description begins with a linear model of the continuous time kinematic processes.

### Continuous Time Filter Definition

$$\dot{s}_0(t) = v(t)$$
$$\dot{s}_1(t) = v(t)$$
$$\dot{s}_2(t) = v(t)$$
$$\dot{v}(t) = a(t)$$
$$a(t) = n(t)$$

where $s$ represents position, $v$ represents velocity, and $a$ represents acceleration, so that $\dot{s}(t) = v(t)$, $\dot{v}(t) = a(t)$, and $n(t)$ is a white Gaussian noise process with PSD $\alpha_n$.

This definition yields the continuous time state-space system.

$$\dot{\mathbf{x}} = \begin{bmatrix} \dot{s}_0 \\ \dot{s}_1 \\ \dot{s}_2 \\ \dot{v} \\ \dot{a} \end{bmatrix} = \underbrace{\begin{bmatrix} 0 & 0 & 0 & 1 & 0 \\ 0 & 0 & 0 & 1 & 0 \\ 0 & 0 & 0 & 1 & 0 \\ 0 & 0 & 0 & 0 & 1 \\ 0 & 0 & 0 & 0 & 0 \end{bmatrix}}_{\mathbf{A}} \begin{bmatrix} s_0 \\ s_1 \\ s_2 \\ v \\ a \end{bmatrix} + \underbrace{\begin{bmatrix} 0 \\ 0 \\ 0 \\ 0 \\ 1 \end{bmatrix}}_{\mathbf{b}} n(t)$$

To allow for the dynamics of adding and deleting signals, as beams are added (deleted), then those rows and columns of the matrix $\mathbf{A}$, corresponding to those signals, as shown above, are added (deleted), and the corresponding row(s) of $\mathbf{b}$ are also added (deleted).

### Definition of State Vector $\mathbf{x}_k$ (in pseudo kinematic variables)

$$\mathbf{x}_k = [s_0, s_1, s_2, v, a]_k^T$$

The state vector $\mathbf{x}_k$ shows the positional assignments of the variables. As signals are added (deleted), the state vector will grow (shrink) accordingly, corresponding to addition (deletion) of range states. Once the state vector $\mathbf{x}_k$ has been defined, the measurement vector $\mathbf{z}_k$ and the state matrix $\mathbf{H}_k$ are determined as follows.

**Measurement Vector $z_k$ and Measurement Matrix $H_k$ Definition**

$$\text{System Measurement Equation:} \quad \mathbf{z}_k = \mathbf{H}_k \mathbf{x}_k + \mathbf{v}_k$$

The Kalman loop uses the measurement equation and estimates to form the residual (or innovations) expressed as:

$$\text{Residual/Innovations:} \quad \mathbf{z}_k - \mathbf{H}_k \hat{\mathbf{x}}_k^-$$

This portion of the Kalman filter algorithm is performed directly in the timing and frequency error detectors of the recovery terminal, as the errors are measured with respect to the estimated state value. In addition, due to the varying size of the measurement vector (and "fixed" size of the state vector), the dimensions of the state matrix $\mathbf{H}_k$ must be dynamic. The measurement matrix is a mathematical fiction, as the processor actually measures differences between the actual state values and predicted values of range and velocity. As such, range and velocity data passed to the filter loop have already been measured as errors (e.g., residuals). Acceleration, since it is measured directly, must be converted to this form, by subtracting the direct measurement from the predicted measurement value in software.

To determine the state matrix $\mathbf{H}_k$ for a specific instance of measurement and state vector combination, the following rules are applied. First, the innovations description is as set forth below, assuming that all beams are active, which is the case here.

$$\mathbf{z}_k - \mathbf{T}_k \hat{\mathbf{x}}_k^- = \begin{bmatrix} s_{err_0} \\ s_{err_1} \\ s_{err_2} \\ v_{err} \\ a_{err} \end{bmatrix}_k = \mathbf{z}_k - \underbrace{\begin{bmatrix} 1 & 0 & 0 & 0 & 0 \\ 0 & 1 & 0 & 0 & 0 \\ 0 & 0 & 1 & 0 & 0 \\ 0 & 0 & 0 & 1 & 0 \\ 0 & 0 & 0 & 0 & 1 \end{bmatrix}}_{\mathbf{T}_k} \hat{\mathbf{x}}_k^-$$

Second, those rows and columns of $\mathbf{T}_k$ corresponding to inactive range states are deleted (e.g., all of row 2 and all of column 2 if MDR is inactive). This reduced matrix is $\mathbf{T'}_k$ and, at this point, has the same number of rows and columns as the (active) state vector.

Third, those rows in $\mathbf{T'}_k$ that correspond to a measurement for that state are retained. In other words, if a state has no measurement currently, that row is deleted from $\mathbf{T'}_k$. The resulting matrix now has the number of rows equal to the measurement dimension and the number of columns equal to the (active) state vector. This is the matrix $\mathbf{H}_k$.

**Measurement Noise Covariance Matrix $R_k$**

The most general measurement covariance matrix $\mathbf{R}_k$, under the present independence assumption that all three signals are on providing range measurements (i.e., derived from time errors), and both velocity (i.e., derived from frequency errors) and direct acceleration measurements are available, is shown below. To determine the specific matrix for an iteration, the rows and columns of the matrix not corresponding to available measurements in the current iteration are deleted. The resulting matrix is square-dimensioned by the size of the current measurement vector.

**State Transition Matrix.** $\Phi_k$

The most general expression for the state transition matrix $\Phi_k$ is given below. For a particular condition (e.g., beam activation), the rows and columns for beams that are inactive (e.g., corresponding to the inactive range states) are deleted. The value $T_k$ is the nominal interval since the last update (e.g., either extrapolation or measurement assimilation).

$$\mathbf{\Phi}_k = e^{\mathbf{A}T_k} = \begin{bmatrix} 1 & 0 & 0 & T_k & T_k^2/2 \\ 0 & 1 & 0 & T_k & T_k^2/2 \\ 0 & 0 & 1 & T_k & T_k^2/2 \\ 0 & 0 & 0 & 1 & T_k \\ 0 & 0 & 0 & 0 & 1 \end{bmatrix}$$

To account for occasional short-duration (e.g., a few seconds) fades of the link the magnitude of $T_k$ is clamped at a maximum value. The clamp is used, since for long extrapolation times (e.g., during downlink outages), the terminal motion component process noise should not grow unbounded, as roll-pitch-yaw motion is oscillatory. The clamp value is best found by simulation for a particular situation.

**Process Noise Covariance Matrix** $\mathbf{Q}_k$

The overall process noise is composed of three independent components:

Terminal motion
Satellite motion
Hop-hop jitter

The terminal and satellite motion are described by the same function forms (only the scale factor differs), with the terminal motion being dominant for non-shore terminals. Thus, in general, the overall process noise covariance $\mathbf{Q}_k^{tot}$ is given by:

$$\mathbf{Q}_k^{tot} = \mathbf{Q}_k^{term} + \mathbf{Q}_k^{sat} + \mathbf{Q}_k^{hop-hop}$$

The terminal (term) and satellite (sat) motion contributions are computed as follows:

$$\mathbf{Q}_k^{term,sat} = E\left\{\mathbf{w}_k \mathbf{w}_k^T\right\} = \int_0^{T_k} dx \int_0^{T_k} dy \, \mathbf{\Phi}(x)\mathbf{b}\mathbf{b}^T \mathbf{\Phi}(y) R_{nn}(T_k - x, T_k - y)$$

where:

$$R_{nn}(t_1, t_2) = E\left\{n(t_1)n(t_2)\right\}$$

For stationarity and whiteness of the noise *n(t),* there results:

$$R_{nn}(t_1, t_2) = E\{n(t_1)n(t_2)\} = \alpha_n^{sat,term}\delta(t_2 - t_1)$$

Stationarity of the noise $n(t)$ implies that the PSD is fixed for all time, while noise whiteness implies that the argument of the delta function is solely a time difference. By using the relationship:

$$\int_{0^-}^{t} \delta(t_2 - t_1)dt_1 = 1, \quad \text{when } t_2 \in [0, t)$$

The expression for $\mathbf{Q}_k^{term,sat}$ becomes:

$$\mathbf{Q}_k^{term,sat} = E\{\mathbf{w}_k \mathbf{w}_k^T\} = \int_0^{T_k} dx \int_0^{T_k} dy\, \mathbf{\Phi}(x)\mathbf{b}\mathbf{b}^T\mathbf{\Phi}(y)R_{nn}(T_k - x, T_k - y)$$

$$= \alpha_n^{sat,term} \int_0^{T_k} dx \int_0^{T_k} dy\, \mathbf{\Phi}(x)\mathbf{b}\mathbf{b}^T\mathbf{\Phi}(y)\delta(T_k - x, T_k - y)$$

$$= \alpha_n^{sat,term} \int_0^{T_k} dx \int_0^{T_k} dy\, \mathbf{\Phi}(x)\mathbf{b}\mathbf{b}^T\mathbf{\Phi}(y)\delta(T_k - x, T_k - y)$$

$$= \alpha_n^{sat,term} \int_0^{T_k} dx \int_0^{T_k} dy\, \mathbf{\Phi}(x)\mathbf{b}\mathbf{b}^T\mathbf{\Phi}(y)\delta(y - x)$$

$$= \alpha_n^{sat,term} \int_0^{T_k} dx\, \mathbf{\Phi}(x)\mathbf{b}\mathbf{b}^T\mathbf{\Phi}(x)$$

By substitution,

$$\mathbf{Q}_k^{term,sat} = \alpha_n^{sat,term} \int_0^{T_k} \begin{bmatrix} 1 & 0 & 0 & x & x^2/2 \\ 0 & 1 & 0 & x & x^2/2 \\ 0 & 0 & 1 & x & x^2/2 \\ 0 & 0 & 0 & 1 & x \\ 0 & 0 & 0 & 0 & 1 \end{bmatrix} \begin{bmatrix} 0 \\ 0 \\ 0 \\ 0 \\ 1 \end{bmatrix} \begin{bmatrix} 0 & 0 & 0 & 0 & 1 \end{bmatrix} \begin{bmatrix} 1 & 0 & 0 & 0 & 0 \\ 0 & 1 & 0 & 0 & 0 \\ 0 & 0 & 1 & 0 & 0 \\ x & x & x & 1 & 0 \\ x^2/2 & x^2/2 & x^2/2 & x & 1 \end{bmatrix} dx$$

$$= \alpha_n^{sat,term} \int_0^{T_k} \begin{bmatrix} x^2/2 \\ x^2/2 \\ x^2/2 \\ x \\ 1 \end{bmatrix} \begin{bmatrix} x^2/2 & x^2/2 & x^2/2 & x & 1 \end{bmatrix} dx$$

$$= \alpha_n^{sat,term} \int_0^{T_k} \begin{bmatrix} x^4/4 & x^4/4 & x^4/4 & x^3/2 & x^2/2 \\ x^4/4 & x^4/4 & x^4/4 & x^3/2 & x^2/2 \\ x^4/4 & x^4/4 & x^4/4 & x^3/2 & x^2/2 \\ x^3/2 & x^3/2 & x^3/2 & x^2 & x \\ x^2/2 & x^2/2 & x^2/2 & x & 1 \end{bmatrix} dx$$

$$= \alpha_n^{sat,term} \begin{bmatrix} T_k^5/20 & T_k^5/20 & T_k^5/20 & T_k^4/8 & T_k^3/6 \\ T_k^5/20 & T_k^5/20 & T_k^5/20 & T_k^4/8 & T_k^3/6 \\ T_k^5/20 & T_k^5/20 & T_k^5/20 & T_k^4/8 & T_k^3/6 \\ T_k^4/8 & T_k^4/8 & T_k^4/8 & T_k^3/3 & T_k^2/2 \\ T_k^3/6 & T_k^3/6 & T_k^3/6 & T_k^2/2 & T_k \end{bmatrix}$$

**<u>Selection of Discrete Time Pseudo Acceleration Noise Variance</u>** $\left( \alpha_n^{sat,term} T_k \right)$

<u>Terminal Motion</u>

Acceleration noise is based on worst-case terminal platform motion and uses a discrete accelerometer measurement. The variance of the acceleration steps (e.g., the noise causing the random walk) taken at a nominal rate (e.g., 100 Hz) is computed over a prescribed time interval (e.g., thirty seconds). A Monte Carlo search can be then used to select "worst case" conditions (i.e., largest step size variance) to set a value for the scaling factor $\alpha_n^{term}$ assuming acceleration jumps can be adequately modeled by Gaussian statistics. In the foregoing, acceleration of the satellite is considered to be negligible.

<u>Satellite Motion</u>

Although the satellite motion term may be considered to be negligible, it is retained for completeness and consistency across all platforms, and because, when link fades occur, extrapolation over many seconds of satellite motion is unbounded and may, in some isolated cases, dominate the process noise. Acceleration noise is based on worst-case satellite platform motion to a fixed position earth position. The variance of the acceleration steps (e.g., the noise causing the random walk) may also be computed over an interval of say 30 seconds. Again, a Monte Carlo search can be is used to select "worst case" conditions, and a value for the scaling factor $\alpha_n^{sat}$, was selected, as a result of an initial cursory search and preliminary simulations.

Hop-Hop Process Noise Matrix $\mathbf{Q}_k^{hop-hop}$

This term only affects the range states, because the effect of hop-hop jitter is merely to alter the effective pseudo-range. There is no Doppler caused by this effective (instantaneous) jump in range. Thus, the matrix $\mathbf{Q}_k^{hop-hop}$ for this component has the form shown below. Again, for states not active, their associated rows and columns are deleted.

$$\mathbf{Q}_k^{hop-hop} = \begin{bmatrix} \sigma_L^2 & 0 & 0 & 0 \\ 0 & \sigma_M^2 & 0 & 0 \\ 0 & 0 & \sigma_X^2 & 0 \\ 0 & 0 & 0 & 0 \end{bmatrix}$$

The timing jitter is a white noise discrete time process, so that the variance (e.g., $\sigma^2$) of the timing jitter is simply the square of the computed 1-sigma value.

**Kalman Filter Initialization**

The foregoing description sets forth the derivations for the matrices X, H, R, Q and $\Phi$, as well as noise properties, namely, everything necessary to sequentially iterate the Kalman filter as data is being received during tracking mode. However, prior to iterating the filter in tracking mode, it is necessary to 'seed' the filter, for initializing its operation, the seeding involving providing an initial state estimate, and an initial covariance estimate. The state estimate is supplied at the completion of the acquisition process after turning on the terminal. Although this coarse adjustment is good enough to start the tracking process, it is not yet good enough to communicate over the link. A preferred method for initializing the Kalman filter, so that it may successfully operate in tracking mode, is as follows.

In general, there are a number of methods that may be employed to initialize the Kalman filter for tracking purposes. The preferred technique employed in accordance with the invention is a pragmatic approach. This preferred method is to start the tracking process, by programming the DEMOD hardware and Kalman filter, with the knowledge about the system state vector $x_k$ provided by the acquisition algorithm result (i.e., the range, velocity and acceleration values at initial acquisition namely $\hat{\mathbf{x}}_0$). The pseudo range state is initialized as the range corresponding to the coarse sync hop's time of arrival from the acquisition process, which is relative to some nominally known range (e.g., possibly aided by ephemeris computation to locate satellite and GPS to locate the receiver). The pseudo velocity state is initialized as the velocity corresponding to the expected velocity from ephemeris processing, plus the velocity offset measured in coarse acquisition, such as by a channelized processor. It is also pragmatically assumed that the initial acceleration is zero, since it is equally likely to be positive or negative at any given time and any latency issues regarding asynchronous measurement of acceleration and initial availability of time/frequency 'seeds' when exiting acquisition should be avoided. Further, since the transition from initial acquisition to tracking mode is nearly instantaneous, the state vector exiting acquisition is the initial tracking state vector. It is assumed that the tracking process begins in state $\hat{\mathbf{x}}_0$.

The initial state error covariance matrix is calculated from the assumed probability density functions (PDFs) of the parameters (i.e., range, velocity and acceleration) of the acquisition process. Initial covariance values of range and velocity may be computed by considering variables with errors uniformly distributed over some maximum ranges, governed by the performance limitation of the acquisition system selected, over which straightforward variance computations are made. This process tends to over bound the true errors providing robustness in initial tracking. The initial error covariance matrix is made diagonal by assuming that the state errors are independent.

With the initial state and state error covariance available, the $\hat{\mathbf{x}}_0$ is loaded into the hardware and the state is projected ahead for one update cycle (i.e., 1.5 ms). At the update boundary, if measurements (i.e., any pseudo-range, pseudo-velocity or acceleration or combination there-of) are available, they are assimilated by the Kalman algorithm in the usual manner; otherwise, another extrapolation cycle is executed in accordance with the conventional processing, such as that described in the above-referenced (Brown and Huang documentation).

Figure 1 diagrammatically illustrates a non-limiting example of a satellite downlink-to-kinematic terrestrial receiver terminal communication system, the satellite containing three user data sources, outputs of which are transmitted to a receiving antenna of a downlink receiver terminal of a surface ship;

Figure 2 is a pictorial diagram illustrating a non-limiting example of a satellite-to-ship-mounted terminal receiver communication system, that employs the Kalman filter-based downlink time and frequency tracker (DFTF) module of the present invention;

Figure 2A is a data collection timing diagram showing times at which time/frequency hopped synchronization pulses within a multi timeslot frame of downlink data from a satellite arrive, and are sampled at a mobile terrestrial receiver terminal, as well as discrete times of receiver antenna kinematic (acceleration) measurements, associated with adaptively updating the Kalman filter within the time/frequency tracker (TFT) module of the present invention;

Figure 3 is a block diagram of a receiver terminal, including front-end demodulator and Kalman filter-based time/frequency tracker (TFT) module of the invention;

Figure 3A graphically illustrates the operating characteristic of the track state manager 304 of the block diagram of Figure 3;

Figure 4 shows a non-limiting example of a signal stream, comprised of a continuous stream of multi timeslot data frames, selected sub-frames of which contain one or more synchronization hops, for which time and frequency measurements are available;

Figure 5 is an event transition diagram associated with successive state transition matrices $\Phi_{k-1}$ and $\Phi_k$ in the instantiations of the Kalman filter operator to be detailed below, and employing the same indexing convention as the time line diagram of Figure 2;

Figure 6 shows a discrete time system description of a respective instantiation of a Kalman filter employed in the various embodiments of the Kalman filter-based time/frequency tracker (TFT) module of the invention;

Figure 6A illustrates the usual form of a Kalman filter iteration, showing both the data assimilation (i.e., data available) and extrapolation (i.e., no data available) cycle operations;

Figure 7 graphically illustrates the manner in which coarse sync hop timing errors, as measured with respect to a geosynchronous satellite, from a shipborne receiver terminal employing the Kalman filter-based time/frequency tracker (TFT) module of the invention, converge relative to zero with time;

Figure 8 graphically illustrates the manner in which coarse sync hop timing errors, as measured with respect to a polar orbit satellite, from a shipborne receiver terminal employing the Kalman filter-based time/frequency tracker (TFT) module of the invention, converge to zero with time;

Figure 9 graphically illustrates the manner in which coarse sync hop frequency errors, as measured with respect to a geosynchronous satellite, from a shipborne receiver terminal employing the Kalman filter-based time/frequency tracker (TFT) module of the invention, converge to zero with time;

Figure 10 graphically illustrates the manner in which coarse sync hop frequency errors, as measured with respect to a polar orbit satellite, from a shipborne receiver terminal employing the Kalman filter-based time/frequency tracker (TFT) module of the invention, converge to zero with time;

Figure 11 graphically illustrates the rapid improvement, over a very short period of time (seconds), of the time and frequency tracking performance of the embodiment of the Kalman filter-based time/frequency tracker (TFT) module of the invention that is used with a shore-based receiver terminal monitoring L and M signals; and

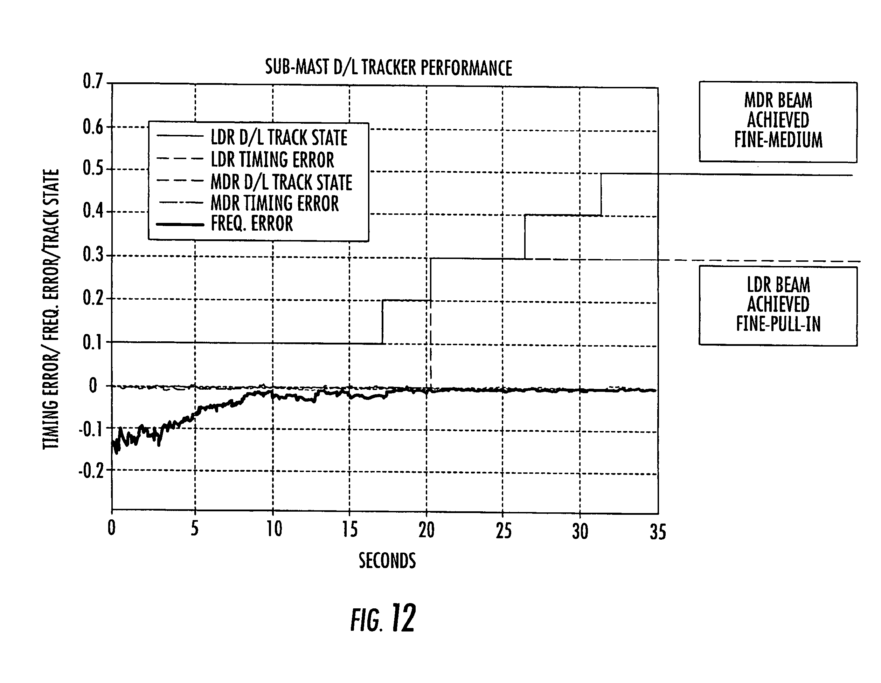

Figure 12 graphically illustrates the improvement, over a relatively brief period of time (on the order of twenty seconds) of the time and frequency tracking performance of the embodiment of the Kalman filter-based time/frequency tracker (TFT) module of the invention that is used with a sub-mast associated receiver terminal monitoring L and M satellite downlink beams.

Before describing various embodiments of the kinematic domain data-updated Kalman filter-based time/frequency tracker (TFT) for a receiver terminal in accordance with the present invention, it should be observed that the invention resides primarily in a prescribed novel arrangement of conventional communication circuits and components, and attendant communication control software that resides in an attendant digital signal processor subsystem. As a result, the configuration of such circuits and components and the manner in they are interfaced with the communications control software have, for the most part, been depicted in the drawings by readily understandable functional block diagrams, which show only those specific aspects that are pertinent to the present invention, so as not to obscure the disclosure with details which will be readily apparent to those skilled in the art having the benefit of the description herein. Thus, the overall block diagram of the invention and associated synchronization hop time slot signal diagrams are primarily intended to show the major components of a preferred embodiment of the invention in convenient functional groupings, whereby the present invention may be more readily understood.

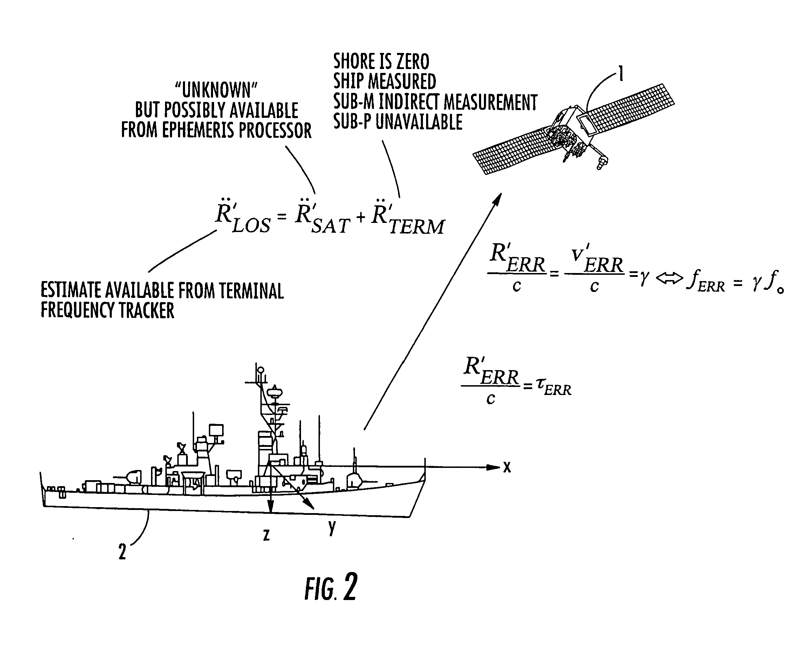

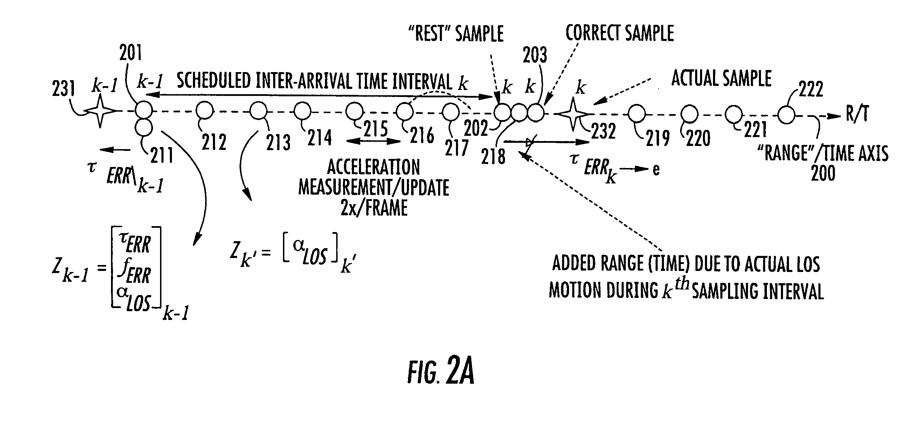

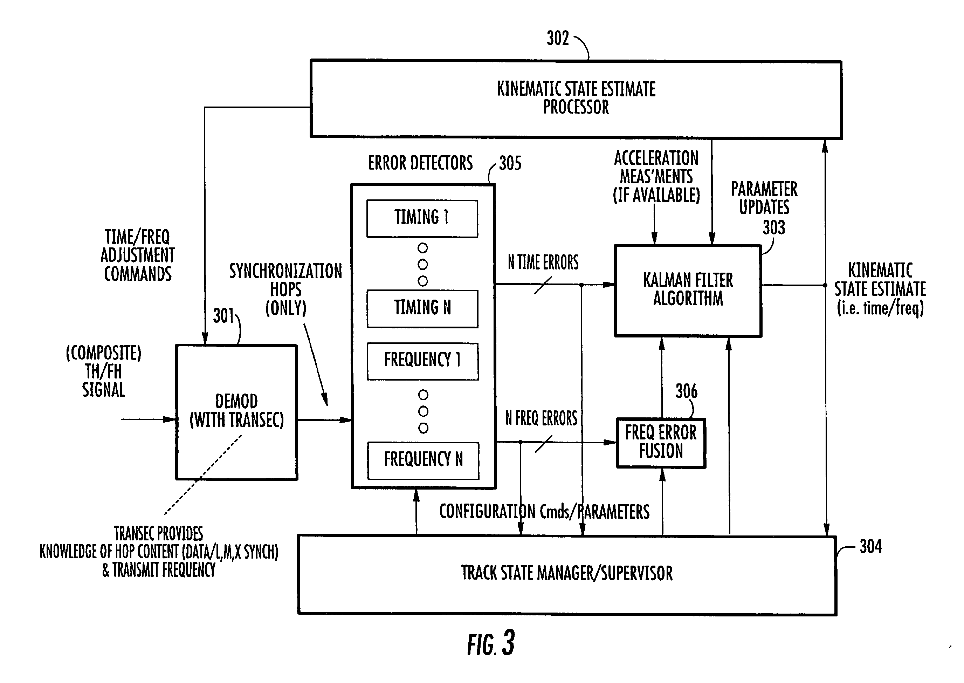

Attention is initially directed to Figure 2, which is a pictorial diagram illustrating a non-limiting example of a satellite-to-ship-mounted terminal receiver communication system, that employs an associated embodiment of the Kalman filter-based time and frequency tracker of the present invention. Similar to the reduced complexity diagram of Figure 1, described above, Figure 2 shows a satellite 1 in downlink communication with a surface ship 2 having directional components along orthogonal axes (x,y,z) for the purposes of motivating the equivalence of kinematic variables with those of interest to recovery of a communication signal. For purposes of providing a non-limitative, but illustrative example, similar to the satellite employed in the satellite downlink system of Figure 1, satellite 1 may carry three independent user data sources, respectively operating at L, M and X data rates. The satellite 1 has some time varying downlink communication path (typically curved through the atmosphere) range $R'_{SAT}$ between the antenna of the ship's receiver terminal in a "null reference" position and the transmit aperture. This range $R'_{SAT}$, although unknown, may be initially estimated by an ephemeris processor on board ship 2. There is an additionally term additive to the total LOS range and that is induced by the time varying terminal motion which causes an additional time varying range of $R'_{TERM}$. This motion is largely unknown directly, save for possibly the measurement of acceleration (or $\overset{..}{R}_{TERM}$ ). For purposes of illustration, it will be assumed that a measurement subsystem is coupled with the antenna and is operative to provide a measure of LOS acceleration, which is approximately equal to double derivative of the boresight range $R'_{LOS}$. In most reasonable applications, this approximation is excellent. For this purpose, as a non-limiting example, the measurement subsystem may comprise an accelerometer, from which a measure of LOS acceleration may be directly derived. The kinematic variables illustrated above induce variations in the timing and frequencies, over and above, that needed to simply synchronize to static communication stations.

As described briefly above, and as will be detailed hereinafter, the Kalman filter-based time and frequency tracker module of the invention relies upon frequency error measurements and timing error measurements carried out with respect to a plurality of synchronization pulses per signal with the error measurements converted into kinematic equivalents, as well as a kinematic measurements associated with terminal motion. In this way, frequency errors manifest themselves as velocity errors, which correspond to the error in the rate of change of range R', and time errors manifest themselves as LOS range errors. The frequency error is expressed as $f_{ERR} = \gamma f_o$ where $f_o$ is the nominal transmit frequency and the $\gamma$ term is associated with relative motion between the ship and the satellite and $\gamma$ is the ratio of the current LOS velocity to the speed of light c. Hence, it is obvious now how a frequency error can be used to derive a velocity measurement once the nominal transmit frequency is known. Similarly, figure 2 shows range errors are scaled time errors, where the conversion is given by $R_{err} = c\tau_{err}$ where c is the speed of light.

Figure 2A is a data collection timing diagram (not drawn to scale), showing times at which hopped time/frequency synchronization pulses within a multi timeslot frame of data transmitted from the transmitter (i.e., satellite) are sampled, as well as times of receipt of asynchronously acquired acceleration measurements, that are used to update the Kalman filter of the time/frequency tracker module of the present invention. In particular, Figure 2A shows a data collection time line or range/time axis 200, distributed along which are (a relatively small number of) expected arrival times 201, 202 and 203 of time- and frequency-hopped synchronization signals as downlinked from the satellite, if the receiver and transmitter terminals were stationary or at rest. As shown, a k-1th sync hop signal or pulse would arrive at time 201, with the next scheduled or kth sync hop pulse for an at rest receiver and transmitter terminal combination being expected to arrive at time 202, there being a scheduled inter-arrival time interval k between immediately successive sync hop pulses for an at rest condition of the receiver terminal. In the present example, however, the receiver terminal is mounted on a dynamic platform, e.g., a ship, which is subject to roll, pitch, yaw and heave motion, so that the receiver terminal's antenna is assumed to be moving (e.g., farther away from the satellite, in association with a rolling condition of the ship), which causes the next or kth sync hop pulse to arrive at some time 203, rather than arriving at scheduled time 202. Depending on the relative direction of LOS motion, closing or opening, the actual arrival time 203 may precede or follow the expected arrival time 202. Additionally, the transmitter motion impacts the time dilation and contraction, but in this situation to a much lesser extent.

Also shown distributed along the data collection time line 200 are more frequently occurring acceleration measurement times 211 - 222, at which acceleration data samples $z_{k'}$ are supplied by an accelerometer subsystem asynchronous to the downlink signal measurements, such as one containing a set of (e.g., three) shipboard antenna-mounted, orthogonally oriented accelerometers, one of which has its sense axis aligned with the boresight of the receiver's antenna, with the antenna being maintained pointed at the satellite by an associated antenna positioning subsystem. In the some instances, an accelerometer subsystem may be mounted to measure boresight acceleration directly, and is operative to measure movement of the boresight LOS. Line-of-sight acceleration measurements, which produce acceleration data samples $Z_{k'}$, are periodically conducted by the reception system's accelerometer subsystem at a rate that is considerably higher than the expected arrival times of sync hop pulses (i.e., 100 Hz versus 10 Hz or less, for example), so that plural sequential kinematic data updates are input to the Kalman filter between arrival times of successive sync hop pulses. For situations when no accelerometer subsystem is installed, or acceleration can be neglected, or acceleration is grossly inaccurate the Kalman filter may operate in a "reduced state", meaning that no acceleration state is used, so that the values of the data events 211 - 222 are all zeros. As will be readily apparent, lack of knowledge of acceleration, when it is truly present, may degrade achievable system performance.

The data collection timeline 200 of Figure 2A also shows a pair of spaced apart, star-shaped symbols 231 and 232, which occur respectively earlier and later than the actual arrival times of the $k$-1th and $k$th sync hop pulses 201 and 203, owing to a prevailing accumulated time error in the terminal. A first of these, symbol 231, is associated with, but is sampled at a time slightly ahead of, the time 201 at which the $k$-1th sync hop pulse arrives. This relatively 'early' timing offset or error $\tau_{ERRk-1}$, between the sampling of the data at time 231 and the actual arrival time 201 of the $k$-1th sync hop pulse, indicates that the receiver has captured the data too soon (e.g., letting a sync data hop be fifty microseconds wide, sampling time 231 may have occurred one microsecond early), and implies that the receiver terminal's sampling control clock needs to be backed off or'retarded' by an amount equal to the timing offset $\tau_{ERRk-1}$, in order to become time-aligned with the downlink signal's embedded clock, where at 232 the clock was retarded too far and requires advancing.

The next or $k^{th}$ sync hop signal depicted on the data collection time line of Figure 2A is shown as being expected to arrive at a time 202, which occurs a scheduled inter-arrival time interval k after the time of arrival 201 of the $k$-1th sync hop pulse for the case of an at rest receiver terminal. However, as pointed out above, in the present example, the prevailing accumulated time error in the tracking system causes the difference in sampling instants between the correct (or on-time value) 203 and the actual sampling instant 232. This error component will be driven toward zero when the tracking system operates properly. The early or late timing error is readily measurable by timing error detector circuitry. For a description and illustration of a non-limiting, but preferred, example of a timing error detector that may be employed for conducting timing error measurements, data representative of which is used to update the Kalman filter of the time/ frequency tracker (TFT) module of the invention, attention may be directed to the following (Reference: Umberto Mengali, M. Morelli, "Data-Aided Frequency Estimation for Burst Digital Transmission", IEEE Transactions on Communications, vol. 45, no. 1, January 1997 pp. 23-25, Aldo N. D'Andrea, Umberto Mengali, Michele Morelli, "Symbol Timing Estimation with CPM Modulation", IEEE Transactions on Communications, vol. 44, no. 10, October 1996 pp. 1362-1372 , and M. Morelli, A. N. D'Andrea, U. Mengali, "Feedforward ML-based timing estimation with PSK signals", IEEE Communications Letters, vol. 1, no. 3, May 1997 pp. 80-82). It will be readily appreciated that a description of the frequency errors and frequency error measurement process is completely analogous to that of the timing explanation provided above, and is obvious to anyone skilled in the art.

As described briefly above, and as will be detailed herein below, in addition to receiving timing error data from one or more timing error detectors (as well as frequency error data, from one or more frequency error detectors, as will be described), the Kalman filter operator is coupled to receive kinematic data representative of accelerometer measurements, that are conducted at regular intervals and at a rate that is considerably higher than the rate at which sync hop pulses are expected to arrive. As will be detailed, the Kalman filter is operative to process timing error data and 'fused' frequency error data derived from processing downlink sync hop pulses from multiple and independent satellite resources, together with kinematic measurement data updates (if available), in a manner that drives detected timing and frequency errors to zero, and thereby effectively time-aligns the receiver terminal's data sampling clock with the clock embedded in the downlink signal.

As a non-limiting example, accelerometer-produced, kinematic data values $Z_{k'}$ (which are representative of the acceleration of the receiver terminal relative to the satellite along the boresight axis of the receiver terminal's antenna, as supplied by the boresight-aligned accelerometer subsystem) are diagrammatically illustrated along the data collection time line 200 of Figure 2A, as being periodically generated at sequentially spaced apart instances in time 211, 212, 213, 214, 215, 216 and 217, within scheduled inter-arrival time interval $k$. (Although the time of occurrence of kinematic data update 211 is shown as corresponding to the time of arrival 201 of the $k$-1th sync hop pulse, the two events are not necessarily time-aligned, and the illustrated overlap of the two data samples is merely coincidental.) In the data collection time line example of Figure 2A, between the arrival of the $k$-1th sync hop pulse at time 201 and the scheduled arrival of the kth sync hop pulse at time 202, six kinematic/acceleration measurement (212 - 217) are made available to the Kalman filter operator.

The additional kinematic measurement update times 218, 219, 220, 221, 222, ,... distributed along data collection time line 200, are intended to show that the acceleration measurement and Kalman filter update process is an ongoing operation, which continues to sequentially produce kinematic data values $z_{k'}$, that are used to repetitively update the Kalman filter. It may also be noted that some timing jitter can be expected, in terms of the actual times at which the kinematic measurement data values $z_{k'}$ are supplied to the Kalman filter operator. However, any kinematic data measurement has latency and jitter sufficiently short as to prevent an overlap of any two acceleration measurements, although the Kalman filter operator is capable of handling such events.

As shown by the vector notation beneath the time of arrival of the sync hop pulse $k$-1, and as will be subsequently detailed in connection with the description of the various implementations for the Kalman filter operator, a respective kinematic data sample $z_{k-1}$ supplied to the Kalman filter is processed as a vector, and includes a time or position error component $\tau_{ERR}$, a velocity or frequency error component $f_{ERR}$, and a line-of-sight (LOS) acceleration component $a_{LOS}$.

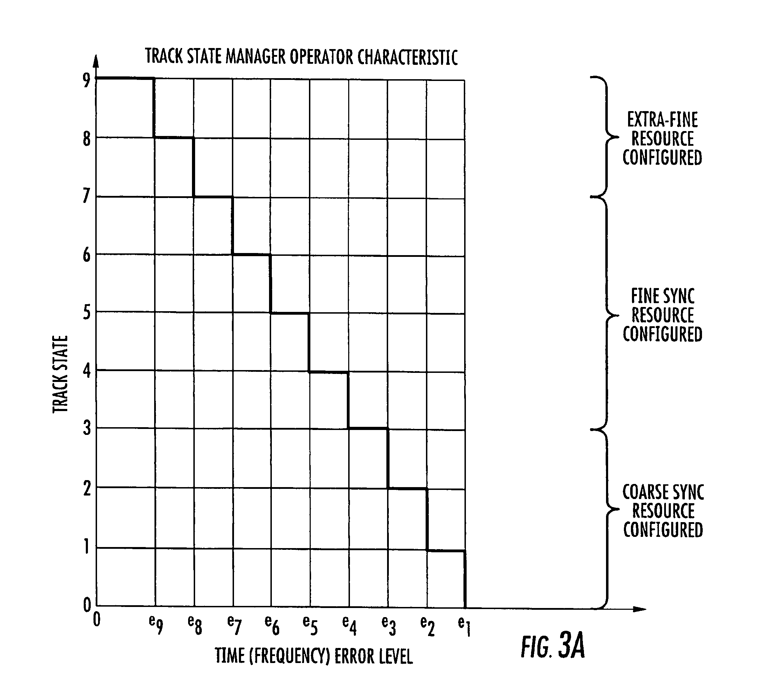

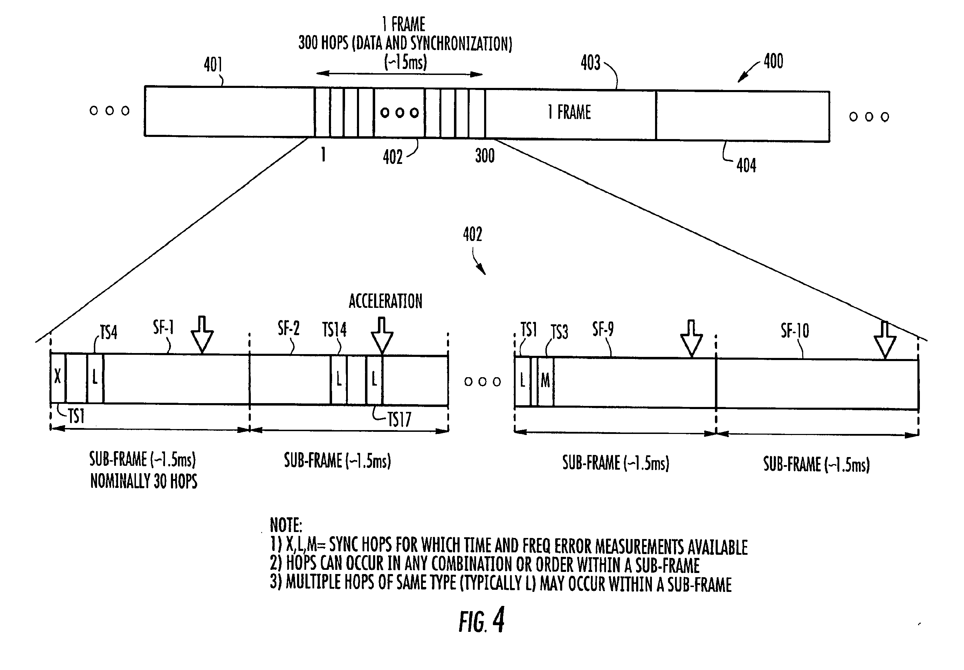

As already noted, in addition to measuring timing errors associated with variations in the distance or range between the satellite and the receiver terminal, it is necessary to measure the frequency error that is associated with the rate of change in the pseudo-range (e.g., velocity) from the receiver terminal to the satellite. In the case of a dynamic terminal platform, such as a surface ship or submarine, this velocity manifests itself as a common frequency error in the signals beam being monitored. As will be described below with reference to the architecture diagram of the TFT module shown in Figure 3 and 4, to account for this frequency error, the invention includes a frequency error detector subsystem, that outputs frequency error data to a frequency error 'fusion' operator. The fusion operator is operative to combine individually and temporally local (i.e., with 1.5 ms) frequency error measurements into a single, more accurate, frequency error measurement. This fusion operator performs maximum likelihood (ML)-based fusion of frequency error data, that relate to the same types of measurements (e.g., common range delay, Doppler), under the assumption of Gaussian errors. ML-fusion of frequency errors for different the different signals L, M, and X provides the benefit of typically reducing the time to achieve the ultimately steady state tracking errors. The fused frequency error data is supplied as a frequency error input to the TFT module's Kalman filter operator. As in the case of detected timing error inputs, the Kalman filter operator is operative to drive detected frequency errors to zero, so that the receiver terminal will effectively track the frequency of the signal as it received under the influence of motion.

Attention is now directed to Figure 3, which shows the architecture of a satellite receiver terminal, including a front end demodulator and the Kalman filter-based time/frequency tracker (TFT) module of the invention. As described briefly above, each embodiment of the TFT module uses receiver terminal-associated kinematic data measurements. Two elements of the kinematic measurement, namely range and velocity, are derived from the timing and frequency errors measured on selected synchronization hop resources, the times of transmission and frequencies of which are a-periodically, or pseudo randomly, varied or hopped within one or more (typically, multiple) signals transmitted from the satellite. In particular, these timing and frequency error measurements (suitably converted) and the acceleration measurements are combined into kinematic data vectors, on 1.5 ms boundaries, and are used as data to update the Kalman filter kinematic state vector, which then outputs the updated kinematic state (aka time/frequency) estimates to a kinematic state estimate processor. This processor uses the Kalman filter output data to adjust the receiver terminal's internal clock (the sampling clock for the terminal processor's associated analog-to-digital converter within the demodulator), thereby allowing demodulation and recovery of data with improved accuracy.

More particularly, as shown in Figure 3, input signals from a satellite downlink-monitoring antenna, associated low noise amplifier and downconverter subsystem, such as may correspond to the antenna and associated receiver of a receiver terminal as is common in receiving systems, such as the shipboard-mounted terminal of Figure 2, are coupled to a demodulator 301 of a suitable front end system capable of receiving RF energy (e.g., and antenna with possible RF downconversion). The programmable demodulator 301 is supplied with nominal knowledge (i.e., TRANSEC) of the time and frequency hop patterns for the signals. As described previously, having knowledge of the frequency hopping plan allows the downlink receiver terminal to know when to look for one or more 'synchronization' hops, within pseudo randomly selected times slots of a frame of data of the monitored downlink signal, where a respective synchronization hop pattern is associated with a respective user of the satellite, and selected in order to avoid the possibility of mutual interference.

Figure 4 shows a non-limiting example of a downlink signal stream 400 of multiple time slot data frames, selected sub-frames ofwhich contain such synchronization hops, from which time and frequency measurements may be derived, as described above. The non-limiting signal stream example 400 is shown as a single frequency-hopped carrier, with a plurality of time multiplexed signals. The invention may also be used with other signals, for example, in the case of a single frequency-hopped carrier per time-hopped signal source. This latter example means that time and frequency error measurements can actually occur simultaneously. For the purposes of Kalman update processing, the period defining "simultaneity" is the pseudo sub-frame duration (i.e., Kalman update cycle) of ~ 1.5 ms.

Figure 4 shows four immediately successive data frames 401, 402, 403, 404 of the overall data stream 400. As detailed for data frame 402, each data frame may contain three hundred time slots. As further shown in the expanded version of data frame 402, the three-hundred time slots of a respective frame may be sub-divided into ten sub-frames (SF's) by the receiver for processing, each sub-frame may be nominally thirty time slots in length, for a duration of nominally 1.5 ms. Four of the ten sub-frames of data frame 402 are identified at SF-1, SF-2, SF-9 and SF-10. As noted above, synchronization hops for the three independent data rate signals (e.g., L, M, X), for which time and frequency measurements are available, are selectively inserted into the time slots of a data frame in a pseudo random manner. Also multiple synchronization hops for the same signal, L, may be inserted into a single sub-frame. Thus, sync hops can occur in any combination or order within a sub-frame. The measurements are processed sequentially to the extent dictated by signal-to-noise ratio requirements. This means that for more accurate measurements of time and frequency error, a larger number of synchronization hops will be aggregated together (e.g., averaged) to improve system performance when individual measurements are noisy. The key element is that the period of aggregation (e.g., eight or sixteen synchronization hops of a certain type need to occur within a period less than the motion periods impacting the transmit and receive terminals). The measurements are always fed into the Kalman processing structure on a sub-frame boundary.

Such a pseudo random distribution of synchronization hops is illustrated in the expanded version of data frame 402, whose initial or first sub-frame SF- 1 has a first time slot TS 1, in which synchronization hop X for the X signal source has been inserted, while a fourth time slot TS4 of sub-frame SF-1 contains a synchronization hop L for the L signal source. Time slots TS14 and TS17of the next successive or second sub-frame SF-2 contain respective ones of a pair of synchronization hops L for the L signal source, while the ninth sub-frame SF-9 is shown as having a sync hop L for the low data rate source inserted into its first time slot TS1, and a sync hop M for the M signal source inserted into its third time slot TS3. The tenth or last sub-frame SF-10 is shown as containing no synchronization hops.

As noted previously, in addition to relying upon timing and frequency errors, derived from synchronization hops, that are pseudo randomly distributed among the times slots of the sub-frames making up the successive frames of data from the satellite, the Kalman filter of the time/frequency tracker (TFT) module of the invention may rely upon kinematic data, such as that sourced from an accelerometer subsystem aligned with the boresight of the receiver terminal's antenna. Acceleration data provides enhanced performance. For this purpose, as in the case of the mobile terminals (e.g., a surface ship-mounted receiver terminal of a satellite downlink communication system), the receiver terminal's associated antenna-positioning subsystem may effectively continuously maintain the boresight of the antenna 'pointed' at the satellite. As described above, this means that a range measurement is, in reality, a 'pseudo' range measurement, which is more useful than a straight line measurement, since it measures the length of the true path over which the electromagnetic wave from the satellite actually travels, so that timing and frequency errors derived from the synchronization hops are more accurate.

Referring again to Figure 3, the front-end demodulator subsystem 301 is coupled to receive time and frequency adjustment commands from a kinematic state estimate processor 302. The demodulator 301 to adjust or refine the tuning of all sampling epochs and oscillators in the receiver terminal uses these commands. The kinematic state estimate processor 302 receives kinematic state estimates, as generated by a Kalman filter operator or algorithm 303. Kalman filter operator 303 has an architecture and coefficient update methodology, to be described, that uses time and frequency errors derived from received time- and frequency-hopped synchronization pulses, in combination with accelerometer-sourced kinematic updates (if available), representative of motion inputs to the receiver terminal, and which produce perturbations in the times of arrival and frequencies of the hopped sync pulses, to produce time and frequency correction values. These time and frequency correction values are employed by the kinematic state estimate processor 302 to generate the time and frequency adjustment commands to the demodulator 301 for refining the frequency and times of transitions in its sampling clock.

Configuration and operational characteristics of the Kalman filter operator 303 are established by configuration commands and parameters supplied by a control processor (track state manager/supervisor) 304, so as to enable the Kalman filter to operate with a selected one of a plurality of satellite-receiver terminal combinations (e.g., a total of eight combinations that may be realized from two satellite types and four earth terminal types), as will be described. The track state manager 304 is also coupled to receive kinematic state estimates produced by Kalman filter operator 303. The track state manager 304 monitors these estimates to track whether the performance of the Kalman filter operator 303 is acceptable. If the monitored estimates produced by the Kalman filter operator 303 indicate a performance level (kinematic state estimate error) that has departed from a prescribed application dependent tolerance, the track state manager processor 304 provides configuration adjustment commands (i.e., controls the state error covariance matrix, so as to increase the Kalman gain), as necessary, to bring the performance of the Kalman filter operator 303 back with acceptable levels. In particular, if the error starts getting too large, the track state manager processor 304 will generate commands that effectively reduce the track state to a lower grade of tracking to essentially open up "capture bandwidth", by using larger Kalman gain on the time and frequency error measurements, so that the system may recapture sync. This operation places more emphasis on current measurements and corresponding less on the extrapolations, which use past data only. Such a controlled adjustment in the tracking state cannot be practically carried out in a PLL-based system.

Figure 3A graphically illustrates the operating characteristic of the track state manager 304 of the block diagram of Figure 3. The vertical axis is track state and the horizontal axis illustrates user selectable tread width, set by the error levels $e_1, e_2, ..., e_9$. The error level $e_j$ is the error level required to enter the j-th track state. The vertical axis is illustrates the user selectable number of track states. Also indicated is the mapping of the synchronization resource commanded to the DEMOD 301, Kalman filter algorithm 303, and error detectors 305 when a track state j is maintained.

Demodulator 301 outputs data representative of the sampling of detected time-and frequency-hopped synchronization pulses to a timing and frequency error detection subsystem 305. The time and frequency error detection subsystem scales the errors to form kinematic measurements of range and velocity error. Range errors are scaled time errors, where the conversion is given by $R_{err} = c\tau_{err}$ where the constant c is the speed of light. The velocity errors are scaled frequency errors, where the conversion is given by $\dfrac{c f_{err}}{f_o}$ , where $f_o$ is the nominal (i.e., rest frame) frequency hop transmitted. As is the case with Kalman filter operator 303, configuration commands and operational parameters for the timing and frequency error detection subsystem 305, as well as those for a frequency error fusion operator 306, are provided by the track state manager/supervisor 304.

As pointed out previously, and as shown diagrammatically in Figure 3, the timing and frequency error detection subsystem 305 contains a plurality N of timing error detectors: Timing 1, ..., Timing N; and a plurality N of frequency error detectors: Frequency 1, ..., Frequency N. As described above, a respective timing error detector, Timing i, is associated with a particular data rate synchronization pulse and may be implemented as detailed in the above-identified reference: Aldo N. D'Andrea, Umberto Mengali, Michele Morelli, "Symbol Timing Estimation with CPM Modulation", IEEE . Transactions on Communications, vol. 44, no. 10, October 1996 pp. 1362-1372 , and M. Morelli, A. N. D'Andrea, U. Mengali, "Feedforward ML-based timing estimation with PSK signals", IEEE Communications Letters, vol. 1, no. 3, May 1997 pp. 80-82. As such, a respective timing error detector Timing i is operative to conduct timing error measurements on a specified ith one ofN synchronization pulses, with the value $\tau_{ERRi}$ of a timing error measurement for that sync hop pulse being coupled to the Kalman filter operator 303. Similarly, a respective frequency error detector, Frequency i, of the timing and frequency error detection subsystem 305, which may be implemented as detailed in the above-identified reference: Umberto Mengali, M. Morelli, "Data-Aided Frequency Estimation for Burst Digital Transmission", IEEE Transactions on Communications, vol. 45, no. 1, January 1997 pp. 23-25, is operative to conduct frequency error measurements on a given ith one ofN sync hop pulses, with the value $f_{ERRi}$ the frequency error measurement being coupled to the frequency error fusion operator 306.

As noted earlier, frequency error fusion operator 306 performs maximum likelihood (ML)-based fusion of frequency (velocity) measurement data, in order to exploit the availability, from multiple sensors (frequency error detectors 1-N), of information that represents the same types of measurements (e.g., common Doppler). Since the frequency/velocity errors are assumed to obey a Gaussian distribution, they are essentially weighted in the fusion process by the inverse of their respective variances. Thus, a very high variance measurement of frequency error will be divided by a relatively large number, so that the weight given to the error will be relatively small. On the other hand, a very accurate measurement (low variance) of frequency error is divided by a much smaller number, so that it is given proportionately more weight. Maximum-likelihood fusion of frequency/velocity measurements for hopped sync pulses of respectively different and independent signals (such as L, M and X of the present example) serves to improve the time to reach an ultimate track state, and it is a beneficial method to avoid complexities associated with scheduling and ordering the processing nearly simultaneous independent measurements of a common parameter. The frequency error processing is basically a two-step process. First, the individual frequency errors for L, M and X are aggregated over the number of hops necessary (e.g., eight or sixteen, as described above), to generate sufficiently accurate measurements. Then, at the sub-frame boundary, when the measurements are to be applied in the Kalman filter, the fusion between all available frequency errors is applied, and a single value is supplied to the Kalman filter.

Since the satellite of the present example includes three signal sources (L, M and X), one, two, or three signals may be transmitted. If only one source is turned on, so that there is only one signal and therefore only one frequency error measurement, no fusion is performed. On the other hand, if two or three sources are turned on, there will be two or three signals, respectively, and therefore two or three frequency error measurements, which may occur in a time-varying order and possibly nearly simultaneously. The manner in which fusion is carried out by the fusion operator 306 for each of these cases will now be described.

Consider a first case, where two data sources are turned on and the frequency error measurements occur with near simultaneity. In this case, two quantities related to the velocity (frequency) state variable are required for the Kalman filter: 1) a single pseudo-velocity measurement; and 2) a measurement variance representative of the fusion process accuracy. The present discussion will present the non-limiting example wherein individual frequency errors are first converted to the equivalent pseudo-velocity, and fusion is carried out in the "velocity domain". Equivalently, fusion may be carried out on the frequency errors, prior to the same conversion.

In order to reduce the complexity of the notations in the equations below, the following assumptions are made.

The true value of velocity is denoted as *V*;
V is the common value for all beams measured;
All measurements are independent; and

Measurements are Gaussian-distributed, with variances $\sigma_1^2$ and $\sigma_2^2$ .

The joint pdf of two velocity measurements ($v_1$, and $v_2$) may therefore be expressed as:

$$p(v_1, v_2) = \frac{1}{\sigma_1 \sqrt{2\pi}} \exp\left(-\frac{(v_1 - V)^2}{2\sigma_1^2}\right) \bullet \frac{1}{\sigma_2 \sqrt{2\pi}} \exp\left(-\frac{(v_2 - V)^2}{2\sigma_2^2}\right)$$

In order to form the maximum likelihood (ML) fusion rule, a solution for $V$ is obtained from the expression:

$$\frac{d}{dV}\left[\ln p(v_1, v_2)\right] = 0$$

The steps of the solution for $V$ may be expressed as:

$$\left[\ln p(v_1, v_2)\right] = \ln(K_1) + -\frac{(v_1 - V)^2}{2\sigma_1^2} + \ln(K_2) + -\frac{(v_2 - V)^2}{2\sigma_2^2}$$

$$\frac{d}{dV}\left[\ln p(v_1, v_2)\right] = \frac{v_1}{\sigma_1^2} - \frac{V}{\sigma_1^2} + \frac{v_2}{\sigma_2^2} - \frac{V}{\sigma_2^2} = 0$$

$$\frac{v_1}{\sigma_1^2} + \frac{v_2}{\sigma_2^2} = \frac{V}{\sigma_2^2} + \frac{V}{\sigma_1^2} = V\left(\frac{\sigma_2^2 + \sigma_1^2}{\sigma_1^2 \sigma_2^2}\right)$$

so that ML-fused velocity estimate $\hat{V}_{ML}$, is:

$$\hat{V}_{ML} = \frac{\sigma_2^2}{\sigma_2^2 + \sigma_1^2} v_1 + \frac{\sigma_1^2}{\sigma_2^2 + \sigma_1^2} v_2$$

To compute the measurement variance $\sigma_{\hat{V}}^2$ of the ML-fused data, the ML-fused velocity $\hat{V}_{ML}$ is expressed as:

$$\hat{V}_{ML} = \alpha v_1 + \beta v_2$$

where $\alpha$ and $\beta$ are the ratios of the variances given in the previous equation for $\hat{V}_{ML}$. The variance $\sigma_{\hat{V}}^2$ is therefore computed as:

$$\sigma_{\hat{A}}^2 = \text{var}\{\alpha v_1 + \beta v_2\} = E\{(\alpha v_1 + \beta v_2)^2\} - E^2\{\alpha v_1 + \beta v_2\}$$

By expanding terms, $\sigma_{\hat{v}}^2$ may be expressed as:

$$
\begin{aligned}
\sigma_{\hat{v}}^2 &= E\{(\alpha v_1 + \beta v_2)^2\} - E^2\{\alpha v_1 + \beta v_2\} \\
&= E\{\alpha^2 v_1^2\} + 2\alpha\beta E\{v_1\}E\{v_2\} + E\{\beta^2 v_2^2\} - [E^2\{\alpha v_1\} + 2E\{\alpha v_1\}E\{\beta v_2\} + E^2\{\beta v_1\}] \\
&= E\{\alpha^2 v_1^2\} - E^2\{\alpha v_1\} + E\{\beta^2 v_2^2\} - E^2\{\beta v_1\} \\
&= \alpha^2[E\{v_1^2\} - E^2\{v_1\}] + \beta^2[E\{v_2^2\} - E^2\{v_2\}] \\
&= \alpha^2 \sigma_1^2 + \beta^2 \sigma_2^2
\end{aligned}
$$

For the second case, where three data sources are turned on, there will be three velocity measurements ($v_1$, $v_2$ and $v_3$). Again, the Kalman filter requires a fused state measurement and a fused measurement variance.

Using the above notational assumptions for two measurements, plus a third variance $\sigma_3^2$ for the third velocity measurement $v_3$, and now having three measurements ($v_1$, $v_2$ and $v_3$) available, their joint pdf may be expressed as:

$$
p(v_1, v_2, v_3) = \frac{1}{\sigma_1 \sqrt{2\pi}} \exp\left(-\frac{(v_1 - V)^2}{2\sigma_1^2}\right) \bullet \frac{1}{\sigma_2 \sqrt{2\pi}} \exp\left(-\frac{(v_2 - V)^2}{2\sigma_2^2}\right) \bullet \frac{1}{\sigma_3 \sqrt{2\pi}} \exp\left(-\frac{(v_3 - V)^2}{2\sigma_3^2}\right)
$$

In order to form the ML-fusion rule, a solution for $V$ is obtained from the expression:

$$
\frac{d}{dV}[\ln p(v_1, v_2, v_3)] = 0
$$

which yields:

$$
\frac{d}{dV}[\ln p(v_1, v_2, v_3)] = \frac{v_1}{\sigma_1^2} - \frac{V}{\sigma_1^2} + \frac{v_2}{\sigma_2^2} - \frac{V}{\sigma_2^2} + \frac{v_3}{\sigma_3^2} - \frac{V}{\sigma_3^2} = 0
$$

To compute the ML-fused velocity $\hat{V}_{ML}$ like terms are gathered as:

$$
\hat{V}_{ML}\left(\frac{1}{\sigma_1^2} + \frac{1}{\sigma_2^2} + \frac{1}{\sigma_3^2}\right) = \frac{v_1}{\sigma_1^2} + \frac{v_2}{\sigma_2^2} + \frac{v_3}{\sigma_3^2}
$$

$$
\hat{V}_{ML}\left(\frac{\sigma_2^2\sigma_3^2 + \sigma_1^2\sigma_3^2 + \sigma_1^2\sigma_2^2}{\sigma_1^2\sigma_2^2\sigma_3^2}\right) = \frac{v_1}{\sigma_1^2} + \frac{v_2}{\sigma_2^2} + \frac{v_3}{\sigma_3^2}
$$

$$
\hat{V}_{ML} = \frac{\sigma_2^2\sigma_3^2 v_1 + \sigma_1^2\sigma_3^2 v_2 + \sigma_1^2\sigma_2^2 v_3}{\sigma_2^2\sigma_3^2 + \sigma_1^2\sigma_3^2 + \sigma_1^2\sigma_2^2} = \alpha v_1 + \beta v_2 + \gamma v_3
$$

From this the last relationship the variance $\sigma_{\hat{V}}^2$ of the fused measurement for three velocities may be express as:

$$\sigma_{\hat{V}}^2 = \alpha^2 \sigma_1^2 + \beta^2 \sigma_2^2 + \gamma^2 \sigma_3^2$$

Extensions to cases where three or more measurements are simultaneously available is a direct extension and straightforward following the steps outlined above.

Although the foregoing details derivations for fused state measurements and fused measurement variances for the cases of two and three measurements, the ML-fusion employed in the present invention is not limited to these or any particular number, but may be applied to additional numbers/measurements by straightforward expansions of the above expressions, without a loss in generality.

There are several practical considerations that led to the use of ML-rule-based measurement fusion (e.g., ML-fusing individual measurements of velocity, as described above), and applying a single update per pseudo sub-frame, over the alternative approach of assimilating the measurements as they arrive sequentially over a pseudo sub-frame. The following factors led to the choice of measurement fusions as a preferred methodology, although either approach induces some errors.

As a non-limiting example, a 1.5 ms (nominal) filter update period (or pseudo sub-frame) was selected as the update interval. In keeping with standard Kalman filter practices, a single measurement vector is assumed to be available at the discrete time "clock tick" or time index *k*. In reality of course, velocity measurements will arrive at various times, in various orders, within each pseudo sub-frame. However, the processing algorithm described here batches all data within a pseudo sub-frame for a single update of the entire state vector with the data available.

The selection of the sub-frame duration (i.e., 1.5 ms) serve to make errors in pseudo-range and pseudo-velocity measurements that are induced by latency over the sub-frame duration, are negligible in the primary application (e.g., satellite downlink to a terrestrial receiver). Hence, a single update, scheduled at the end of a pseudo sub-frame, is reasonable, and the actual arrival times of the measurements within a pseudo sub-frame can be ignored, so that a measurement can be used, as though it arrived at a discrete time "clock tick" or time index k.

In adopting the fusion approach, a choice had to be made as to which velocity state to use as the measurement for the update. Rather than work out selection rules and code them (which costs development time), it was decided to fuse the velocity measurements available into a single velocity measurement for the Kalman loop. The fusion rule selected was the maximum likelihood (ML) rule, as detailed above. Selection of the ML-rule was based on the fact that:

it seemed reasonable;
it is easy to analytically compute by hand; and
it reduced to simple equation to code.

Using multiple independent (weighted) observations increases the pseudo-velocity measurement accuracy over any "selection-type" rule, and avoids issues of missing some case/condition in the filter implementation.

In contrast with (ML_rule-based) measurement fusion, sequential processing of the measurements is also (algorithmically) an effective means to ingest multiple measurements. However, in its various instantiations, the Kalman loop may be updated as few as once per pseudo sub-frame, or as many as five times per pseudo sub-frame. At the outset, it was concluded that scheduling/reserving a processor timeline for peak load could cause an undue hardship (e.g., development effort for little performance gain) on the real-time aspects of the digital signal processor (DSP) code. Sequential updating was avoided, because it was deemed to be an overburdening complication to the system. One issue involved in using sequential updating is having to monitor the length of time that has elapsed since the last update. The last update could occur either at the end of a frame (e.g., acceleration present or projection cycle), or at the last sync hop measurement. While not complex, this is tedious to develop, and the current embodiment uses an essentially fixed cycle time which is eases design of the operating system as update tasks are now periodic with known approximate period and not asynchronous. Another issue is signaling the processor when data becomes available. This requires some type of message passing, timers, polling, or interrupt structure, which again adds complexity to the implementation. Additional complexity is added when multiple consecutive hops have measurements, because it would be preferred not to alter the algorithmic state vector, as the hardware state was not changed for the string of measurements. Sequential updating alters not only the range state for the active beam, but also the "global" velocity and acceleration states, and hence affects the range states for other beams. So the choice is to either select a fusion approach to handle the exception case of multiple contiguous hops with measurements, or to accept mis-modeling of an algorithmic change in the state vector. It is reasonable to assume that this value would be small, since over the update period (for fusion) whatever happens is acceptable. It should also be noted that, since the hardware can only accept one update for frequency, and one update for time, per pseudo sub-frame, the sequential algorithm approach is really just a method for fusion of data, one measurement at a time. Fusion, however, is based on state vectors (within a pseudo sub-frame) that do not directly represent the hardware.

For purposes of illustrating its use with a variety of communication system configurations, two respective embodiments of the TFT module and associated instantiations of its Kalman filter operator, are detailed in Table 1.

Table 1.

| Model Type | Embodiment | Process Noise | Measurements | State |
|---|---|---|---|---|
| Random Walk Velocity | 1 | White Accel | TED,FED | [s1,s2,s3,v] |
| Random Walk Accelaration | 2 | White Jerk | TED,FED,Accel | [s1,s2,s3,v,a] |

In the TFT module of each embodiment listed in Table 1, a "Random Walk" type of Kalman filter is employed. The term "Random Walk" means that data underlying driving mechanism is a white noise process. "TED" refers to timing error detector, while "FED" refers to frequency error detector. "Accel" refers to an accelerometer preferably mounted on the bore-sight of the receiving system. The state vector "s1" corresponds to the pseudo-range for the L signal, the state vector "s2" corresponds to the pseudo-range for the M signal, the state vector "s3" corresponds to the pseudo-range for the X signal, the state vector "v" corresponds to pseudo velocity, and the state vector "a" corresponds to acceleration.

As described above, like the satellite ofthe system of Figure 1, the satellite of the downlink communication system example of Figure 2, whose surface ship-based receiver terminal has been augmented to incorporate the downlink time/frequency tracker (TFT) module of the present invention, contains three independent user sources, respectively operating at successively higher data rates: L, M and X, in association with three independent range states. As a result, a respective Kalman filter update will be based upon measurements carried out for each of these three independent beam range states. In addition to velocity measurements for the respective range states, there is also single global velocity/frequency state associated with the common Doppler among the three range states, and a single global acceleration state.

When multiple measurements occur in an update period, which may be nominally 1.5 ms, as a non-limiting example, all measurements are applied as if they occurred simultaneously at the end of the period. Although this introduces some latency in supplying the data to the Kalman filter, its effect is insignificant. As described above, the Kalman filter of the DTFT module of the present invention uses an ML-based fusion rule, and "blends" or "fuses" the velocity measurements available in each period. One example is when acceleration and (non-primary) time error is measured.

The Kalman filter is operative to estimate the current state, in the minimum mean square error (MMSE) sense, using all previous data and system parameters (e.g., state evolution, measurement, driving noise and measurement noise). If the sample rate of the system is high enough, then a mismatched filter on a short timescale (e.g., inter-sample) can be accounted for with artificially increased process noise; process noise is increased relative to that required, had system dynamics been known at the outset.

In order to account for the variations in possible system dynamics for all combinations system parameters (e.g., terminal types, satellite types, look angles, signal level variations, platform dynamics) while avoiding a (possibly adaptive) filter selection and (possibly nonlinear) parameter estimation for the filter, a random walk acceleration-based implementation of the Kalman filter was chosen, when it is available, for several reasons. First of all, the true acceleration is non-constant for mobile platforms and the random walk model is the next simplest approach. Secondly, terminal acceleration measurements are available for three of the four receiver terminal types of the present example.

As pointed out above, in order to apply a linear discrete-time approximation to a non-linear (in time) continuous time system, the Kalman update rate for extrapolation and measurement cycles must be sufficiently high. Extrapolation (i.e., update cycles without any measurements) occurs nominally every 1.5 ms. An extrapolation cycle is pre-empted when one or more measurements are available within a 1.5 ms pseudo sub-frame. For receiver terminals with available acceleration data, the data may arrive at a nominal rate of 100 Hz, which is much higher than any motion period attributable to the receiver. There is a fundamental limit on the average arrival rate of the sync hop-derived measurements. The rate is governed by the transmitter, and the present description addresses the case where link resources (i.e., all possible hop slots) are to be preserved to the extent possible for information transfer to maintain link utility for users.

The average arrival rate of link derived measurements (i.e., from synchronization hops) must also be typically no greater than the periods of the receiver platform motion, and preferably less. With measurements gathered in this manner, the measurement sample rate and system update/prediction rate (e.g., time step) are high enough to follow the non-linear (true) state evolution (which, in discrete time, is a series of levels) with a random walk-based Kalman filter. Further, the noise level employed in the Kalman filter can adequately compensate for the difference between the true (nonlinear) filter state and the state estimated from the random walk-based Kalman filter. Although this approach may impact performance by overpenalizing "noise", in an attempt to make most state jumps appear as sub 2-sigma noise events, for example, as filter rates increase, relative to system motion dynamics, the filter's accuracy will improve, since the state jumps (e.g., steps in acceleration) become smaller.

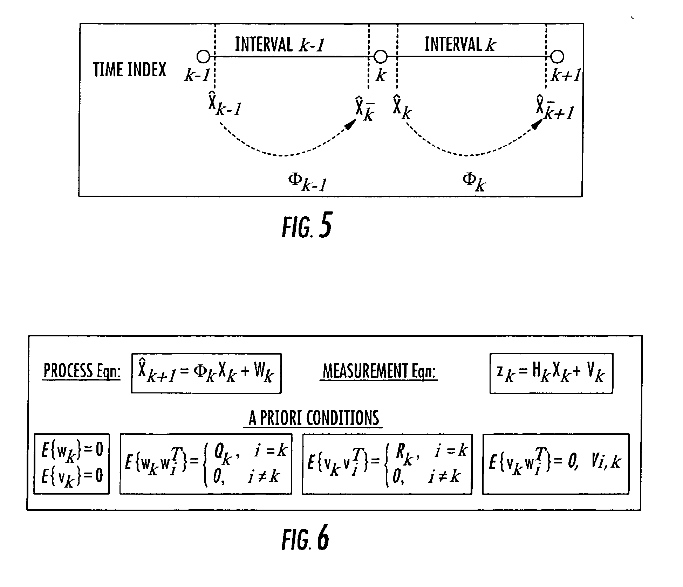

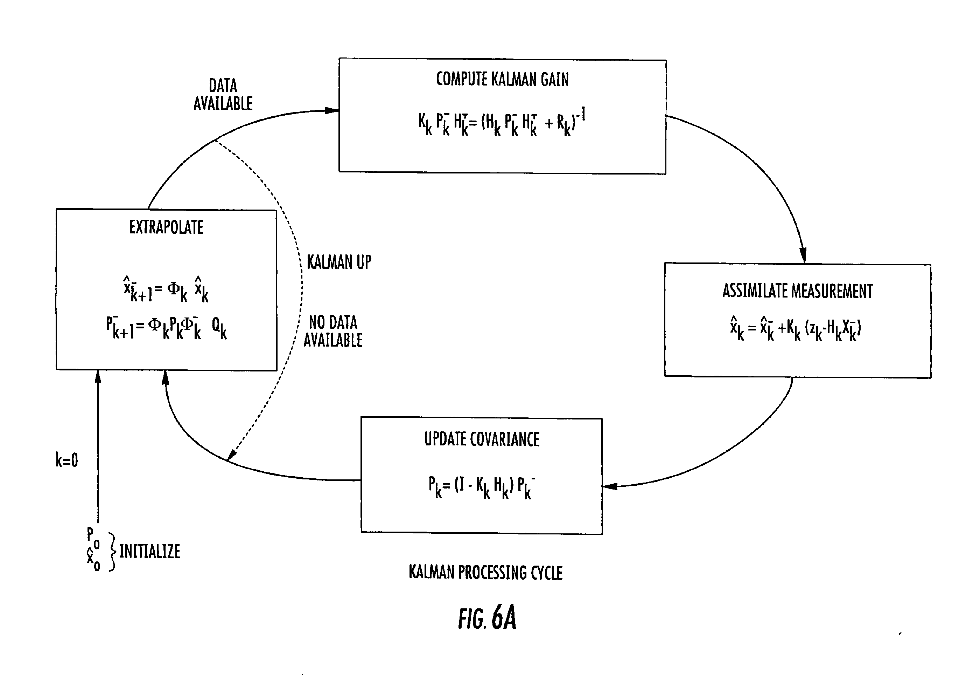

Attention is now directed to Figures 5, 6 and 6A, wherein Figure 5 is an event transition diagram associated with successive state transition matrices $\Phi_{k-1}$ and $\Phi_k$ in the instantiations of the Kalman filter operator to be detailed below, and employing the same indexing convention as the time line diagram of Figure 2, Figure 6 shows a discrete time system description of a respective instantiation of a Kalman filter operator, and Figure 6A shows the usual form of a Kalman filter interaction, depicting both data assimilation and extrapolation cycle operations.

In accordance with the indexing convention shown therein, a 'hat' (^) over a term means 'estimate', the term (e.g., $\mathbf{x}$) under the hat is the parameter being estimated, and the subscript is the time index of the estimate. A minus sign (-) superscript represents an instant in time just prior to a time index, and indicates that the data value is valid just before a new data value is sampled; no superscript represents an instant at the time index. Therefore, a data estimate $\hat{\mathbf{x}}_k$ at time index $\mathbf{k}$ corresponds to the sum of the estimate $\hat{\mathbf{x}}^-_k$, just prior to the time index k, and the product of the Kalman gain $K$ times the measurement $\mathbf{z}_k$ at time $\mathbf{k}$, which is the projected estimate from Kalman filter processing. In other words, an estimate is updated with real data.

Thus, for the example of Figure 5, an arbitrary time index is shown at k-1, at which a state estimate $\hat{\mathbf{x}}_{K-1}$ is produced. To produce this estimate data (i.e., measurements) $Z_{k-1}$ that became available in interval k-2 (not shown) are batch processed at time index k-1. The processing time e, is such that the result $\hat{\mathbf{x}}_{k-1}$ is available at time k-1+e. This result $\hat{\mathbf{x}}_{k-1}$ is used to project the state ahead over a time corresponding to the interval of nominally 1.5 ms. This produces a projected state estimate $\hat{\mathbf{x}}^-_k$. The next successive time index k is coincident with the end of the time interval k-1. The state estimate $\hat{\mathbf{x}}^-_k$ is the state condition that exists just prior to the time index k. When the next measurement sample $\mathbf{z}_k$ (produced at the time index k) is processed, what results is a new state estimate $\hat{\mathbf{x}}_k$, which is representative of the state estimate for the true state that exists at time index k. Again there is a processing time e associated with the computation of the updated state estimate $\hat{\mathbf{x}}_k$. The fundamental limit on the processing time e is such that e is less than the smallest inter-sample period, which is typically~ 1.5 ms. The updated state estimate is then projected ahead one-step to represent the estimate of the state at time index k+1 and shown as $\hat{\mathbf{x}}^-_{k+1}$. The time index $k$+1 is coincident with the end of the time interval $k$. The estimate $\hat{\mathbf{x}}^-_{k+1}$ is a state condition estimated to exists at time index $k$+1, Again, data collected in the interval between time k and k+1 denoted as $\mathbf{z}_{k+1}$ pertaining the true system state at k+1 denoted as $x_{k+1}$ on the interval k is used to update the projection producing the state estimate $\hat{\mathbf{x}}_{k+1}$. If, in any interval, there is no measurement available to assimilate, then the projected state generically denoted as $\hat{x}^-_L$ becomes the updated stated $\hat{\mathbf{x}}_L$ for the next interval. Hence the recursion continues with increasing time index. Thus, there are discrete sample times (corresponding to the time indices), at which data samples are considered to occur. The latency between the actual measurement time within a interval and the time of updating a the state vector with such measurements is important, but as long as the latency is small, here limited to a sub-frame of ~1.5 ms, with respect to the motion periods, the latency can be ignored.

Two instantiations of the Kalman filter are detailed below, to illustrate the core processing of the invention, and are based on one aspect of the novelty of using "kinematic equivalent" parameters. "Kinematic equivalence" means that range errors are scaled time errors, where the conversion is given by $R_{err} = c\tau_{err}$, where c is the speed of light. The velocity errors are scaled frequency errors, where the conversion is given by $\dfrac{cf_{err}}{f_o}$ where $f_o$ is the nominal (i.e., rest frame) frequency transmitted. Acceleration, velocity time rate of change, measurements (when available) are made directly in the kinematic domain and as such do not require conversions.

As noted above, the Kalman state for range (which is termed pseudo-range) is not the true physical line-of-sight range. This is due to several factors. First, the LOS range is a straight line path from the receiver to the transmitter, and not the actual curved propagation path traveled by electromagnetic waves from the satellite to the earth terminal. As described above, these time offsets can be converted to equivalent range values (e.g., RADAR commonly equates echo time delay to range). Secondly, in addition to kinematic influences, there are inherent timing offsets caused by initial misadjustment of the receiver clock epochs with respect to the transmitter. Hence, the time error measured by the current system contains all effects (e.g., those normally incurred in synchronizing two remote communication systems and those induced by the true kinematic motion along the LOS). The receiver parameters, in well designed, systems can be considered quasi-static in relation to the much larger effects of kinematic motion. Hence, adopting a model where the time errors measured over time relate directly to true kinematic motion is well-justified. The feedback system of Figure 3 will seek to produce a correction of all timing error sources to zero and maintain that value. As will be readily apparent, the range state should, for total clarity, be thought of as a 'pseudo' LOS range. It is a feature of the invention that range to the transmitting station is maintained by the receiver using the communication signal in the manner described herein.

As noted above, the Kalman state for velocity is not the true physical line-of-sight velocity. This is primarily due to the fact that frequency error measured by the receiver, and subsequently converter to velocity, contains both kinematic influences of true motion and the inherent frequency offsets caused by initial maladjustment of the receiver oscillators with respect to the transmitter. As mentioned above, these frequency offsets can be converted to equivalent velocity values. Hence, the velocity error measured by the current system contains all effects (e.g., those normally incurred in synchronizing two remote communication systems and those induced by the true kinematic motion along the LOS). The receiver parameters, in well-designed systems can be considered quasi-static in relation to the much larger effects of kinematic motion. Therefore, adopting a model where frequency errors measured over time relate directly to true kinematic motion is well justified. The feedback system of Figure 3 seeks to produce a correction of all timing error sources to zero and to maintain that value. As will be readily apparent, the frequency state should, for total clarity, be thought of as a 'pseudo' LOS velocity.

For the purposes of illustration, several (i.e., two) instantiations of the Kalman filters time/frequency tracker (TFT) module shown in Figure 3, for the combinations listed in Table 1, will now be described.

**TFT Module Embodiment No. 1**

In the course of designing a Kalman filter, it is necessary to begin generally, since actual processes involve continuous time, so that continuous time equations are first derived, then discretized. A, set forth below, is the standard nomenclature for a state transition matrix - relating how to take the current state related to the estimate $\hat{x}$ - in accordance with standard control theory for a linear system. Using standard Kalman filter analysis, discrete time states are derived, indexed by the discrete time index k, as described above with reference to Figure 5. Thus, the discrete time-based state transition matrix contains the state $\hat{x}_k$ at time k to the state $\hat{x}_{k+1}$, at time k+1. A variable $w_k$ denotes the discrete time version of continuous time noise. Since measurements occur in discrete time, error can be thought of as a time-varying function, with error data always being supplied at one time, or at a sequence of times. Thus, this system falls under the category of continuous-discrete systems. It is "continuous" because the process being addressed is continuously evolving; it is "discrete" because measurements are obtained at discrete times.

In the Kalman filter relationships set forth in Figure 6, the expectation (E) of the process noise is that the process noise is zero. Also, the expectation of measurement noise is zero. The cross-correlation of the process noise vectors is also zero. Namely, when times are unequal, the process noise (e.g., that at time k) is not correlated with the process noise at a previous time (e.g., at time k-1), or at a later time (e.g., at time k+1). At any given time, the process noise can have some matrix form **Q** (which can be time-varying). The Kalman filter relationships illustrated in Figure 6 show that the same holds true for the measurement noise covariance matrix **R.**

**Continuous Time Filter Definition**

$$\dot{s}_0(t) = \quad \nu(t)$$
$$\dot{s}_1(t) = \quad \nu(t)$$
$$\dot{s}_2(t) = \quad \nu(t)$$
$$\dot{v}(t) = \quad n(t)$$

where $s$ represents position, and $\nu$ represents velocity, so that $\dot{s}(t) = \nu(t)$, and $n(t)$ is a white Gaussian noise process with PSD $\alpha_n$.

This definition yields the continuous time state-space system:

$$\dot{\mathbf{x}} = \begin{bmatrix} \dot{s}_0 \\ \dot{s}_1 \\ \dot{s}_2 \\ \dot{v} \end{bmatrix} = \underbrace{\begin{bmatrix} 0 & 0 & 0 & 1 \\ 0 & 0 & 0 & 1 \\ 0 & 0 & 0 & 1 \\ 0 & 0 & 0 & 0 \end{bmatrix}}_{\mathbf{A}} \begin{bmatrix} s_0 \\ s_1 \\ s_2 \\ v \end{bmatrix} + \underbrace{\begin{bmatrix} 0 \\ 0 \\ 0 \\ 1 \end{bmatrix}}_{\mathbf{b}} n(t)$$

which leads to the discrete time system filter description for the Kalman filter, shown in Figures 6 and 6A, and using the indexing convention shown in Figure 5.

To allow for the dynamics of adding and deleting beams, then as beams are added (deleted), those rows and columns of the matrix A, corresponding to those beams, as shown above, are added (deleted), and the corresponding row(s) of b are also added (deleted).

As set forth below, the state vector $\mathbf{x}_k$ is comprised of three position (s) components and one velocity (v) component. For the current embodiment, this is the maximum size the state vector may take. As noted above the size of the state vector is adjusted to fit the number of active users. For example, if the TFT module is currently tracking only one signal (for example, the L user), its Kalman filter's state vector would be reduced to $\mathbf{x}_k = [s_0, v]_k^T$. If all three signals (the maximum number available) happen to be turned on, then the state vector would be as set forth below, under the heading Definition of State Vector $\mathbf{x}_k$. As an alternative technique, rather than change the dimensions of the state vector, the values of inactive components could be set to 0s, without a loss in generality.

### Definition of State Vector $\underline{\mathbf{x}_k}$ (in pseudo kinematic variables)

$$\mathbf{x}_k = [s_0, s_1, s_2, v]_k^{T}$$

The state vector $\mathbf{x}_k$ shows the positional assignments of the variables. As noted above, as signals are added (deleted), the state vector grows (shrinks) accordingly, corresponding to addition (deletion) of range states. In this example the pseudo range states so, s1, and s2 refer to the pseudo range for L, M and X users respectively. Once the state vector $\mathbf{x}_k$ has been defined, the processor proceeds to determine the measurement vector $\mathbf{z}_k$ and the state matrix $\mathbf{H}_k$ as follows:

### Measurement Vector $\underline{\mathbf{z}_k}$ and Measurement Matrix $\underline{\mathbf{H}_k}$ Definition

$$\text{System Measurement Equation:} \quad \mathbf{z}_k = \mathbf{H}_k \mathbf{x}_k + \mathbf{v}_k$$

The Kalman loop uses the measurement equation and estimates to form the residual (or innovations) expressed as:

$$\text{Residual/Innovations:} \quad \mathbf{z}_k - \mathbf{H}_k \hat{\mathbf{x}}_k^-$$

This portion of the Kalman filter algorithm is performed directly in the timing and frequency error detectors, as the errors are measured with respect to the estimated state value. In addition, due to the varying size of the measurement vector (and "fixed" size of the state vector), the dimensions of the matrix $\mathbf{H}_k$ must be dynamic. Again, note that the state vector $\mathbf{H}_k$ size changes as beams are added or deleted. $\mathbf{H}_k$ is a matrix containing a linear combination of state vectors that are actually being currently measured. Namely, $\mathbf{H}_k$ is the measurement matrix and, in this case, is diagonal. In some situations, state variables may have to be measured in isolation; for example, it may not be possible to obtain the range of **L** signal or **M** signal , per se, but rather it might be possible to obtain a measurement on a combination of things, represented as a measurement $\mathbf{z}_k$. For example, it may be possible to obtain a measure $z_1$ of the sum of two quantities as $x_1 + x_2$, plus the values $z_2 = x_2$, and $z_3 = x_3$. Thus, for the vector $\mathbf{z}_k = [z_1, z_2, z_3]$, the matrix $\mathbf{H}_k$ will be defined by the three rows $\mathbf{z}_1 = 110$, $z_2 = 010$, and $z_3 = 001$.

Thus, as time transpires, in each processing interval (e.g., a 1.5 ms processing interval), there may be an L signal pseudo range and/or pseudo velocity measurement and/or an acceleration measurement, but nothing else. Then, in the next interval, M signal related data may arrive. Namely, over a plurality of (1.5 ms) sub-frame intervals within a frame of data, there may be, or may not be, data associated with any of the synchronization resources for one (1.5 ms) processing interval; namely, there may be up to sixteen possible events in one processing interval - all or any combination in between, so that the matrix $\mathbf{H}_k$ has up to sixteen possible terms in a given (1.5 ms) interval. In the matrix equation set forth below, for the first TFT module embodiment described herein, $S_{err0}$ corresponds to the L signal, $S_{err1}$ corresponds to the M signal, and $S_{err2}$ corresponds to the X signal.

The measurement matrix is a mathematical fiction, as the processor actually measures differences between the actual state values and the predicted values of range and velocity. As such, range and velocity data passed to the filter loop have already been measured as errors (e.g., residuals). In other words, using the data supplied by the time and frequency error detection subsystem 305 of Figure 3, the Kalman filter operator 303 performs the operation:

$\mathbf{z}_k - \mathbf{H}_k \hat{\mathbf{x}}_k^-$ , as will be described in detail for the various embodiments. Acceleration, since it is measured directly, must be converted to this form, by subtracting the direct measurement from the predicted measurement value in software.

Determining $\mathbf{H}_k$ for a specific instance of measurement is important because only one user (e.g., the L signal) may be active. To determine the matrix $\mathbf{H}_k$ and state vector combination, the following rules are applied. First, the innovations description is defined as set forth as follows, assuming all beams are active.

$$\mathbf{z}_k - \mathbf{T}_k \hat{\mathbf{x}}_k^- = \begin{bmatrix} S_{err_0} \\ S_{err_1} \\ S_{err_2} \\ v_{err} \end{bmatrix}_k = \mathbf{z}_k - \underbrace{\begin{bmatrix} 1 & 0 & 0 & 0 \\ 0 & 1 & 0 & 0 \\ 0 & 0 & 1 & 0 \\ 0 & 0 & 0 & 1 \end{bmatrix}}_{\mathbf{T}_k} \hat{\mathbf{x}}_k^-$$

Second, those rows and columns of $\mathbf{T}_k$ corresponding to inactive range states are deleted (e.g., all of row 2 and all of column 2, if M signal is inactive). This reduced matrix is $\mathbf{T'}_k$ and, at this point, has the same number of rows and columns as the (active) state vector.

Third, those rows in $\mathbf{T'}_k$ that correspond to a measurement for that state are retained. In other words, if a state (e.g., velocity) currently has no measurement, its associated row is deleted from $\mathbf{T'}_k$. The resulting matrix now has a number of rows equal to the measurement dimension and a number of columns equal to the (active) state vector. This is the matrix $\mathbf{H}_k$.

### Measurement Noise Covariance Matrix $\mathbf{R}_k$

The most general measurement covariance matrix $\mathbf{R}_k$, under the independence assumption that all three signals are on and a velocity measurement is available, is shown below. To determine the specific matrix for an iteration of less than all measurements available, the rows and columns of the matrix not corresponding to measurements available in the current iteration are deleted. The resulting matrix is square-dimensioned by the size of the current measurement vector.

$$\mathbf{R}_k = E\{\mathbf{v}_k \mathbf{v}_k^T\} = \begin{bmatrix} \sigma_{S_0}^2 & 0 & 0 & 0 \\ 0 & \sigma_{S_1}^2 & 0 & 0 \\ 0 & 0 & \sigma_{S_2}^2 & 0 \\ 0 & 0 & 0 & \sigma_V^2 \end{bmatrix} = c^2 \begin{bmatrix} \sigma_{TED_0}^2 & 0 & 0 & 0 \\ 0 & \sigma_{TED_1}^2 & 0 & 0 \\ 0 & 0 & \sigma_{TED_2}^2 & 0 \\ 0 & 0 & 0 & \sigma_{FED}^2 \end{bmatrix}$$

In the above matrix expression for the measurement noise covariance matrix $\mathbf{R}_k$, the subscripts TED and FED for the noise covariance values $\sigma^2$ correspond to the timing error detectors and the frequency error detectors of the system of Figure 3. To determine the accuracies of the detectors, simulations may be run to determine their errors, and realize noise covariance values that are inserted in the above matrix. In the present invention, different synchronization hops (coarse, fine and extra-fine) all provide different measurement error levels, and the track state assumed by the TFT system indicates which synchronization resource to select, using the track state as manager 304. Therefore, the error measurement matrix has the general form shown, with parameters populated governed by the individual choice of synchronization source and timing/frequency detector. As noted above, the matrix may vary in size depending upon activity on the downlink at any particular time.

**State Transition Matrix** $\Phi_k$

The most general expression for the state transition matrix $\Phi_k$ is exponential, as given below, where A is the matrix of the continuous time state-space system defined previously, and $\mathbf{T}_k$ is the nominal inter arrival time interval between k and k+1 (previously noted as nominally 1.5 ms). For a particular condition (e.g., beam activation), the rows and columns for signals that are inactive (e.g., corresponding to the inactive range states) are deleted. Also, the terminal portion is clamped at a maximum value, set by the maximum expected motion over the longest expected extrapolation time (i.e., duration with no update measurements), since for long extrapolation times (e.g., during downlink outages), the terminal motion component process should not grow unbounded, as roll-pitch-yaw motion is oscillatory.

$$\Phi_k = e^{AT_k} = \begin{bmatrix} 1 & 0 & 0 & T_k \\ 0 & 1 & 0 & T_k \\ 0 & 0 & 1 & T_k \\ 0 & 0 & 0 & 1 \end{bmatrix}$$

**Process Noise Covariance Matrix** $Q_k$

The overall or total process noise is composed of three independent components:

Terminal motion
Satellite motion
Hop-hop jitter

The terminal and satellite motion are described by the same function forms (only the scale factor differs), with terminal motion being dominant for non-shore terminals. Thus, the overall process noise covariance $\mathbf{Q}_k^{tot}$ is given by:

$$\mathbf{Q}_k^{tot} = \mathbf{Q}_k^{term} + \mathbf{Q}_k^{sat} + \mathbf{Q}_k^{hop-hop}$$

The terminal (term) and satellite(sat) motion contributions are computed as follows:

$$\mathbf{Q}_k^{term,sat} = E\left\{\mathbf{w}_k \mathbf{w}_k^T\right\} = \int_0^{T_k} dx \int_0^{T_k} dy\, \Phi(x)\mathbf{b}\mathbf{b}^T \Phi(y) R_{nn}(T_k - x, T_k - y)$$

where:

$$R_{nn}(t_1, t_2) = E\left\{n(t_1)n(t_2)\right\}$$

For the case of stationarity and whiteness of the noise *n(t)*, there results:

$$R_{nn}(t_1,t_2) = E\{n(t_1)n(t_2)\} = \alpha_n^{sat,term}\delta(t_2 - t_1)$$

Stationarity of the noise *n(t)* implies that the PSD is fixed for all time, while noise whiteness implies that the argument of the delta function is solely a time difference. By using the relationship: $R_{nn}(t_1,t_2) = E\{n(t_1)n(t_2)\} = \alpha_n^{sat,term}\delta(t_2 - t_1)$, the expression for $\mathbf{Q}_k$ can be simplified, by noting:

$$\int_0^t dt_1 \int_0^t dt_2\, \delta(t_2 - t_1) = t$$

because, for any choice of $t_1$, the inner integral evaluates to unity. Thus, the remaining integral is the integral of unity over an interval of *t*. More rigor can be introduced by considered intervals starting at $0^-$, but the result is essentially the same. As a result,

$$\int_{0^-} \delta(t_2 - t_1)dt_1 = 1, \quad \text{when } t_2 \in [0,t)$$

so that,

$$\mathbf{Q}_k^{term,sat} = E\{\mathbf{w}_k\mathbf{w}_k^T\} = \int_0^{T_k} dx \int_0^{T_k} dy\, \mathbf{\Phi}(x)\mathbf{b}\mathbf{b}^T\mathbf{\Phi}(y)R_{nn}(T_k - x, T_k - y)$$

$$= \alpha_n^{term,sat} \int_0^{T_k} dx \int_0^{T_k} dy\, \mathbf{\Phi}(x)\mathbf{b}\mathbf{b}^T\mathbf{\Phi}(y)\delta(T_k - x, T_k - y)$$

$$= \alpha_n^{term,sat} \int_0^{T_k} dx \int_0^{T_k} dy\, \mathbf{\Phi}(x)\mathbf{b}\mathbf{b}^T\mathbf{\Phi}(y)\delta(T_k - x, T_k - y)$$

$$= \alpha_n^{term,sat} \int_0^{T_k} dx \int_0^{T_k} dy\, \mathbf{\Phi}(x)\mathbf{b}\mathbf{b}^T\mathbf{\Phi}(y)\delta(y - x)$$

$$= \alpha_n^{term,sat} \int_0^{T_k} dx\, \mathbf{\Phi}(x)\mathbf{b}\mathbf{b}^T\mathbf{\Phi}(x)$$

Then, by substitution,

$$\mathbf{Q}_k^{term,sat} = \alpha_n^{term,sat} \int_0^{T_k} \begin{bmatrix} 1 & 0 & 0 & x \\ 0 & 1 & 0 & x \\ 0 & 0 & 1 & x \\ 0 & 0 & 0 & 1 \end{bmatrix} \begin{bmatrix} 0 \\ 0 \\ 0 \\ 1 \end{bmatrix} \begin{bmatrix} 0 & 0 & 0 & 1 \end{bmatrix} \begin{bmatrix} 1 & 0 & 0 & 0 \\ 0 & 1 & 0 & 0 \\ 0 & 0 & 1 & 0 \\ x & x & x & 1 \end{bmatrix} dx$$

$$= \alpha_n^{term,sat} \int_0^{T_k} \begin{bmatrix} x \\ x \\ x \\ 1 \end{bmatrix} \begin{bmatrix} x & x & x & 1 \end{bmatrix} dx$$

$$= \alpha_n^{term,sat} \int_0^{T_k} \begin{bmatrix} x^2 & x^2 & x^2 & 1 \\ x^2 & x^2 & x^2 & 1 \\ x^2 & x^2 & x^2 & 1 \\ 1 & 1 & 1 & 1 \end{bmatrix} dx$$

$$= \alpha_n^{term,sat} \begin{bmatrix} T_k^3/3 & T_k^3/3 & T_k^3/3 & T_k^2/2 \\ T_k^3/3 & T_k^3/3 & T_k^3/3 & T_k^2/2 \\ T_k^3/3 & T_k^3/3 & T_k^3/3 & T_k^2/2 \\ T_k^2/2 & T_k^2/2 & T_k^2/2 & T_k \end{bmatrix}$$

Thus, the resulting matrix expression for $\mathbf{Q}_k^{term,sat}$ involves powers of the inter-arrival time $T_k$ and a scale factor $\alpha_n^{term,sat}$. The inter-arrival time term $T_k$ always appears in the lower right hand corner of the matrix. The inter-arrival time that is supposed to occur is known a priori; since the actual time of arrival is being tracked, the lower right hand corner of the process noise covariance matrix gives an estimate of $T_k$, which enables every other term in the matrix to be readily derived. In order to select the value of the scale factor $\alpha_n^{term,sat}$, a motion model for the terminal may be run over a prescribed interval (e.g., 30 sec.), as described below, to obtain the variance of the velocity steps, and the deviation of RMS from zero is computed. For example, where the motion model corresponds to a heaving ship, what matters is whether the satellite is located directly over the ship; for the case of a rolling ship, what matters is whether the satellite is located at the horizon. As described below, for the case of a rough sea state, a value on the order of 0.001 1 may be derived for the scale factor $\alpha_n^{term,sat}$.

**Selection of Discrete Time Pseudo Velocity Noise Variance ($\alpha_n T_k$)**

Terminal Motion

Velocity noise is based on worst-case receiver terminal platform motion (azimuth and elevation to satellite, with the receiver terminal being in a rough sea state). The variance of the velocity steps (e.g., the noise causing the random walk) is computed over a prescribed period (e.g., thirty seconds). A Monte Carlo search is used to select "worst case" kinematic conditions for a given application. It was determined that, for a geosynchronous satellite to a submarine based receiver, a value of 0.001, for example, may be selected for $\alpha_n^{term}$.

In the foregoing, acceleration of the satellite is considered to be negligible; moreover, acceleration jumps can be adequately handled by Gaussian statistics.

Satellite Motion

Although the satellite motion term may be considered to be negligible, it is retained for two reasons. The first is for completeness and consistency across all platforms. The second is that when sync hop dropouts occur, for example, for scintillation or true satellite outage, extrapolation over many seconds of the satellite motion is unbounded and may, in some isolated cases, dominate processing noise. As for the case of terminal motion, described above, velocity noise is selected based on worst-case satellite platform motion (azimuth and elevation to satellite, with the terminal in a rough sea state), and the satellite platform motion to a fixed position. The variance of the velocity steps (e.g., the noise causing the random walk) is computed over an interval of thirty seconds. A Monte Carlo search is used to select "worst case" kinematic conditions for a given application. For a geosynchronous satellite to a submarine based receiver, a value of 0.001 was selected for $\alpha_n^{sat}$.

Hop-Hop Process Noise $\mathbf{Q}_k^{hop-hop}$

This term is introduced by on-board jitter of the transmitting platform. Again, it is retained here for completeness and code standardization. This term only affects the range states, because the effect of hop-hop jitter is merely to alter the effective range. There is no true Doppler caused by this effective (instantaneous) jump in range. Thus, the matrix for this component is of the form shown below. Again, for states that are not active, their associated rows and columns are deleted.

$$\mathbf{Q}_k^{hop-hop} = \begin{bmatrix} \sigma_L^2 & 0 & 0 & 0 \\ 0 & \sigma_M^2 & 0 & 0 \\ 0 & 0 & \sigma_X^2 & 0 \\ 0 & 0 & 0 & 0 \end{bmatrix}$$

For the L source, for example, timing jitter may be bounded by a value often ns (max) jitter on the satellite, for example, with the maximum timing jitter being a 4-sigma number. The peak-peak group delay in the terminal may be on the order of 0.6 ns (2-sigma). Thus, a 1-sigma timing jitter of approximately 10/4 + 0.6/2 = 3.1 ns results. However, as a conservative estimate, 5.0 ns may be used for the 1-sigma timing jitter. The timing jitter is a white noise discrete time process, so that the variance (e.g., $\sigma^2$) of the timing jitter is simply the square of the computed 1-sigma value.

Similar computations are performed for the M and X signal sources.

**Kalman Filter Initialization**

The foregoing description sets forth the derivations for the matrices X, H, R, Q and $\Phi$, as well noise properties for the Kalman filter of the first DTFT module embodiment, namely, everything necessary to sequentially iterate the Kalman filter as data is being received during tracking mode. However, as described previously, prior to iterating the filter in tracking mode, it is necessary to 'seed' the filter, for initiating its operation, the seeding involving providing an initial state estimate, and an initial covariance estimate. The state estimate is supplied at the completion of the acquisition process after turning on the terminal. At this point, there is a very large time uncertainty (e.g., ten milliseconds of uncertainty). As typical in communication systems, the initial acquisition of the signal, while providing coarse time and frequency adjustments, is insufficient to allow communication services to begin. However, this coarse adjustment is good enough to initialize the tracking process (e.g., what goes into $\hat{\mathbf{x}}_o^-$). A preferred method for initializing the Kalman filter, so that it may successfully operate in tracking mode, will now be described.

The preferred method for initializing the Kalman filter is to start the tracking process with the state of knowledge provided by the acquisition algorithm, and program the hardware with this value as $\hat{\mathbf{x}}_o$, rather than $\hat{\mathbf{x}}_o^-$. The initial state error covariance $P_0$ that can be calculated from the PDFs of the acquisition process, assuming a normal distribution. This assumption is valid, even if the PDFs used to calculate the initial covariances are uniform. In practice, any reasonable method to set variances is adequate, as long as the tracking results are useable (i.e., exhibit minimal bias). The $\hat{\mathbf{x}}_o$ is loaded into the hardware and, when the first measurement in tracking is taken, the initial value of $\hat{\mathbf{x}}_o$ is projected forward by the time interval between the successive time indices k=0 and k=1 to the value $\hat{\mathbf{x}}_1^-$, which is the state just as the tracking data is taken at time index k=1.

From the foregoing description, it can be seen that there is a prior PDF for tracking, defined by the acquisition algorithm output projected through the time to collect the first tracking measurement. Defining the acquisition algorithm output is considered to be the 'truth', and assigning it as the method to generate the prior PDF is a subjective choice. However, this choice makes practical sense, in that acquisition and tracking are considered to be two separate processes, and in that the acquisition algorithm is highly accurate (due to stringent rules on accepting acquisition of velocity and range), so that the acquisition data is a valid starting point for state initialization of tracking. Using this acquisition data as $\hat{\mathbf{x}}_0$ means that the tracking process begins with data $\mathbf{z}_1$, and the system essentially has no $\mathbf{z}_0$ for tracking. Also, the assumed PDF on $\hat{\mathbf{x}}_0$ (and assuming a Gaussian distribution) means that $\hat{\mathbf{x}}_1^-$ and $\mathbf{P}_1^-$ can be computed (see figure 6A), and the measured elapsed time used to arrive at the first measurement.

Briefly summarizing the foregoing, in accordance with a preferred method for initializing the Kalman filter, the pseudo range state is initialized as the range corresponding to the coarse sync hop's time of arrival from the acquisition process, which is the acquisition window midpoint time plus the time hypothesis offset within the acquisition window. The pseudo velocity state is initialized as the velocity corresponding to the expected velocity from ephemeris processing, plus the velocity offset due to the frequency bin indicating that the coarse sync hop has been acquired.

The initial error covariance matrix $\mathbf{P}_0$ is diagonal, and initial state errors are independent. Initial covariance values of range and velocity may be computed, by considering variables as being uniformly distributed over some maximum ranges, and then applying the result, as though the variables are Gaussian-distributed for the Kalman filter. This is acceptable, because the "equivalent" variance of a Gaussian with uniform region of support, mapped to the +/- 4-sigma, yields a variance of $\Delta^2 / 16$, which is smaller than the $\Delta^2 / 3$ used. The errors are overbounded in range selection and variance selection for robustness; while this does not hurt overall performance, a longer pull-in time may result.

The initial pseudo range error covariance term is set as the variance (in range) of a uniform random variable over the support range of set by acquisition knowledge.

$$\int_{-\Delta}^{\Delta} \frac{1}{2\Delta} x^2 \, dx = \frac{1}{6\Delta} x^3 \bigg|_{-\Delta}^{\Delta} = \frac{1}{3} \Delta^2$$

For example $\Delta$ could be a value of +/- 57 m/s, which may be chosen as a maximum value, since this corresponds to an +/- 4 KHz Doppler error, after acquisition. Using this variable as uniformly distributed over a range of [-60 m/s, 60 m/s], for example, then, $\Delta = 60$ in the above, and the initial velocity state covariance is 1200.

## TFT Module Embodiment No. 2

In the course of designing a Kalman filter, it is necessary to begin generally, since actual processes involve continuous time, so that continuous time equations are first derived, then discretized. A, set forth below, is the standard nomenclature for a state transition matrix - relating how to take the current state related to the estimate $\hat{\mathbf{x}}$ - in accordance with standard control theory for a linear system. Using standard Kalman filter analysis, discrete time states are derived, indexed by the discrete time index k, as described above with reference to Figure 5. Thus, the discrete time-based state transition matrix contains the state $\hat{\mathbf{x}}_k$ at time k to the state $\hat{\mathbf{x}}_{k+1}$, at time k+1. A variable $\mathbf{w}_k$ denotes the discrete time version of continuous time noise. Since measurements occur in discrete time, error can be thought of as a time-varying function, with error data always being supplied at one time, or at a sequence of times. Thus, this system falls under the category of continuous-discrete systems. It is "continuous" because the process being addressed is continuously evolving; it is "discrete" because measurements are obtained at discrete times.

In the Kalman filter relationships set forth in Figure 6, the expectation (E) of the process noise is that the process noise is zero. Also, the expectation of measurement noise is zero. The cross-correlation of the process noise vectors is also zero. Namely, when times are unequal, the process noise (e.g., that at time k) is not correlated with the process noise at a previous time (e.g., at time k-1), or at a later time (e.g., at time k+1). At any given time, the process noise can have some matrix form $\mathbf{Q}$ (which can be time-varying). The Kalman filter relationships illustrated in Figure 6 show that the same holds true for the measurement noise covariance matrix $\mathbf{R}$.

## Continuous Time Filter Definition

$$\dot{s}_0 (t) = \nu(t)$$
$$\dot{s}_1 (t) = \nu(t)$$
$$\dot{s}_2 (t) = \nu(t)$$

$\dot{s}(t) = \quad a(t)$

$\dot{v}(t) = \quad n(t)$

where s represents position, $v$ represents velocity, and *a* represents acceleration, so that $\dot{s}(t) = v(t)$, $\dot{v}(t) = a(t)$, and *n (t)* is a white Gaussian noise process with PSD $\alpha_n$.

This definition yields the continuous time state-space system,

$$\dot{\mathbf{x}} = \begin{bmatrix} \dot{s}_0 \\ \dot{s}_1 \\ \dot{s}_2 \\ \dot{v} \\ \dot{a} \end{bmatrix} = \underbrace{\begin{bmatrix} 0 & 0 & 0 & 1 & 0 \\ 0 & 0 & 0 & 1 & 0 \\ 0 & 0 & 0 & 1 & 0 \\ 0 & 0 & 0 & 0 & 1 \\ 0 & 0 & 0 & 0 & 0 \end{bmatrix}}_{\mathbf{A}} \begin{bmatrix} s_0 \\ s_1 \\ s_2 \\ v \\ a \end{bmatrix} + \underbrace{\begin{bmatrix} 0 \\ 0 \\ 0 \\ 0 \\ 1 \end{bmatrix}}_{\mathbf{b}} n(t)$$

which leads to the discrete time system filter description for the Kalman filter, shown in Figures 6 and 6A, and using the indexing convention shown in Figure 5.

To allow for the dynamics of adding and deleting beams, then as beams are added (deleted), those rows and columns of the matrix **A**, corresponding to those beams, as shown above, are added (deleted), and the corresponding row(s) of **b** are also added (deleted).

As set forth below, the state vector $\mathbf{x}_k$; is comprised of three position (s) components and one velocity (v) component. For the current embodiment, this is the maximum size the state vector may take. As noted above the size of the state vector is adjusted to fit the number of active users. For example, if the TFT module is currently tracking only one signal (for example, the L user), its Kalman filter's state vector would be reduced to $\mathbf{x}_k = [s_0,v]_k{}^T$. If all three signals (the maximum number available) happen to be turned on, then the state vector would be as set forth below, under the heading Definition of State Vector $\mathbf{x}_k$. As an alternative technique, rather than change the dimensions of the state vector, the values of inactive components could be set to zeroes, without a loss in generality.

### Definition of State Vector $\mathbf{x}_k$ (in pseudo kinematic variables)

$$\mathbf{x}_k = [s_0, s_1, s_2, v, a]_k^T$$

The state vector $\mathbf{x}_k$ shows the positional assignments of the variables. As noted above, as signals are added (deleted), the state vector grows (shrinks) accordingly, corresponding to addition (deletion) of range states. In this example the pseudo range states so, s1, and s2 refer to the pseudo range for L, M and X users respectively. Once the state vector $\mathbf{x}_k$ has been defined, the processor proceeds to determine the measurement vector $\mathbf{z}_k$ and the state matrix $\mathbf{H}_k$ as follows:

### Measurement Vector $\mathbf{z}_k$ and Measurement Matrix $\mathbf{H}_k$ Definition

$$\text{System Measurement Equation:} \quad \mathbf{z}_k = \mathbf{H}_k \mathbf{x}_k + \mathbf{v}_k$$

The Kalman loop uses the measurement equation and estimates to form the residual (or innovations) expressed as:

$$\text{Residual/Innovations:} \quad \mathbf{z}_k - \mathbf{H}_k \hat{\mathbf{x}}_k^-$$

This portion of the Kalman filter algorithm is performed directly in the timing and frequency error detectors, as the errors are measured with respect to the estimated state value. In addition, due to the varying size of the measurement vector (and "fixed" size of the state vector), the dimensions of the matrix $\mathbf{H}_k$ must be dynamic. Again, note that the state vector $\mathbf{H}_k$ size changes as beams are added or deleted. $\mathbf{H}_k$ is a matrix containing a linear combination of state vectors that are actually being currently measured. Namely, $\mathbf{H}_k$ is the measurement matrix and, in this case, is diagonal. In some situations, state variables may have to be measured in isolation; for example, it may not be possible to obtain the range of L signal or M signal , per se, but rather it might be possible to obtain a measurement on a combination of things, represented as a measurement $\mathbf{z}_k$. For example, it may be possible to obtain a measure $z_1$ of the sum of two quantities as $x_1 + x_2$, plus the values $z_2 = x_2$, and $z_3 = x_3$. Thus, for the vector $\mathbf{z}_k = [z_1, z_2, z_3]$, the matrix $\mathbf{H}_k$ will be defined by the three rows $z_1 = 110$, $z_2 = 010$, and $z_3 = 001$.

Thus, as time transpires, in each processing interval (e.g., a 1.5 ms processing interval), there may be an L signal pseudo range and/or pseudo velocity measurement and/or an acceleration measurement, but nothing else. Then, in the next interval, M signal related data may arrive. Namely, over a plurality of (1.5 ms) sub-frame intervals within a frame of data, there may be, or may not be, data associated with any of the synchronization resources for one (1.5 ms) processing interval; namely, there may be up to sixteen possible events in one processing interval - all, or any combination in between, so that the matrix $\mathbf{H}_k$ has up to sixteen possible terms in a (1.5 ms) interval. In the matrix equation set forth below, for the first TFT module embodiment described herein, $s_{err0}$ corresponds to L signal, $s_{err1}$ corresponds to M signal and $s_{err2}$ corresponds to X signal.

The measurement matrix is actually a mathematical fiction, as the processor actually measures differences between the actual state values and the predicted values of range and velocity. As such, range and velocity data passed to the filter loop have already been measured as errors (e.g., residuals). In other words, using the data supplied by the time and frequency error detection subsystem 305 of Figure 3, the Kalman operator 303 performs the operation: $\mathbf{z}_k - \mathbf{H}_k \hat{\mathbf{x}}_k^-$. Acceleration, since it is measured directly, must be converted to this form, by subtracting the direct measurement from the predicted measurement value in software.

Determining $\mathbf{H}_k$ for a specific instance of measurement is important because only one user (e.g., L signal) may be active. To determine the matrix $\mathbf{H}_k$ and state vector combination, the following rules are applied. First, the innovations description is defined as set forth as follows, assuming all beams are active.

$$\mathbf{z}_k - \mathbf{T}_k \hat{\mathbf{x}}_k^- = \begin{bmatrix} s_{err_0} \\ s_{err_1} \\ s_{err_2} \\ v_{err} \\ a_{err} \end{bmatrix}_k = \mathbf{z}_k - \underbrace{\begin{bmatrix} 1 & 0 & 0 & 0 & 0 \\ 0 & 1 & 0 & 0 & 0 \\ 0 & 0 & 1 & 0 & 0 \\ 0 & 0 & 0 & 1 & 0 \\ 0 & 0 & 0 & 0 & 1 \end{bmatrix}}_{\mathbf{T}_k} \hat{\mathbf{x}}_k^-$$

Second, those rows and columns of $\mathbf{T}_k$ corresponding to inactive range states are deleted (e.g., all of row 2 and all of column 2, if MDR is inactive). This reduced matrix is $\mathbf{T}'_k$ and, at this point, has the same number of rows and columns as the (active) state vector.

Third, those rows in $\mathbf{T}'_k$ that correspond to a measurement for that state are retained. In other words, if a state has no measurement currently, that row is deleted from $\mathbf{T}'_k$. The resulting matrix now has the number of rows equal to the measurement dimension and the number of columns equal to the (active) state vector. This is the matrix $\mathbf{H}_k$.

### Measurement Noise Covariance Matrix $\mathbf{R}_k$

The most general measurement covariance matrix $\mathbf{R}_k$, under the independence assumption that all three beams are on, and (from Table 1) and acceleration measurements are available, is shown below. To determine the specific matrix for an iteration, the rows and columns of the matrix not corresponding to available measurements in the current iteration are deleted. The resulting matrix is square-dimensioned by the size of the current measurement vector.

$$\mathbf{R}_k = E\{\mathbf{v}_k \mathbf{v}_k^T\} = \begin{bmatrix} \sigma_{S_0}^2 & 0 & 0 & 0 & 0 \\ 0 & \sigma_{S_1}^2 & 0 & 0 & 0 \\ 0 & 0 & \sigma_{S_2}^2 & 0 & 0 \\ 0 & 0 & 0 & \sigma_V^2 & 0 \\ 0 & 0 & 0 & 0 & \sigma_a^2 \end{bmatrix} = c^2 \begin{bmatrix} \sigma_{TED_0}^2 & 0 & 0 & 0 & 0 \\ 0 & \sigma_{TED_1}^2 & 0 & 0 & 0 \\ 0 & 0 & \sigma_{TED_2}^2 & 0 & 0 \\ 0 & 0 & 0 & \sigma_{FED}^2 & 0 \\ 0 & 0 & 0 & 0 & \sigma_{acc}^2/c^2 \end{bmatrix}$$

In the above matrix expression for the measurement noise covariance matrix $\mathbf{R}_k$, the subscripts TED and FED for the noise covariance values $\sigma^2$ correspond to the timing error detectors and the frequency error detectors of the system of Figure 3. The ACC subscript refers to the variance (i.e., measurement error) in the acceleration measurement sub-system. To determine the accuracies of the detectors, simulations may be run to determine their errors, and realize noise covariance values that are inserted in the above matrix. In the present invention, different synchronization hops (coarse, fine and extra-fine) all provide different measurement error levels, and the track state assumed by the TFT system indicates which synchronization resource to selected using the track state manager 304 of Figure 3. Therefore, the error measurement matrix has the general form shown, with parameters populated governed by the individual choice of synchronization source and timing/frequency detector. As noted above, the matrix may vary in size depending upon activity on the downlink at any particular time.

### State Transition Matrix $\Phi_k$

The most general expression for the state transition matrix $\Phi_k$ is exponential, as given below, where A is the matrix of the continuous time state-space system defined previously, and $\mathbf{T}_k$ is the nominal inter arrival time interval between k and k+1 (previously noted as nominally 1.5 ms). For a particular condition (e.g., beam activation), the rows and columns for signals that are inactive (e.g., corresponding to the inactive range states) are deleted. Also, the terminal portion is clamped at a maximum value, set by the maximum expected motion over the longest expected extrapolation time (i.e., duration with no update measurements), since for long extrapolation times (e.g., during downlink outages), the terminal motion component process should not grow unbounded, as roll-pitch-yaw motion is oscillatory.

$$\Phi_k = e^{AT_k} = \begin{bmatrix} 1 & 0 & 0 & T_k & T_k^2/2 \\ 0 & 1 & 0 & T_k & T_k^2/2 \\ 0 & 0 & 1 & T_k & T_k^2/2 \\ 0 & 0 & 0 & 1 & T_k \\ 0 & 0 & 0 & 0 & 1 \end{bmatrix}$$

### Process Noise Covariance Matrix $\mathbf{Q}_k$

The overall process noise is composed of three independent components:

Terminal motion
Satellite motion
Hop-hop jitter

The terminal and satellite motion are described by the same function forms (only the scale factor differs), with terminal motion being dominant for non-shore terminals. Thus, the overall process noise covariance $\mathbf{Q}_k^{tot}$ is given by:

$$\mathbf{Q}_k^{tot} = \mathbf{Q}_k^{term} + \mathbf{Q}_k^{sat} + \mathbf{Q}_k^{hop-hop}$$

The terminal (term) and satellite(sat) motion contributions are computed as follows:

$$\mathbf{Q}_k^{term,sat} = E\left\{\mathbf{w}_k \mathbf{w}_k^T\right\} = \int_0^{T_k} dx \int_0^{T_k} dy\ \Phi(x)\mathbf{b}\mathbf{b}^T\Phi(y)R_{nn}(T_k - x, T_k - y)$$

where:

$$R_{nn}(t_1, t_2) = E\left\{n(t_1)n(t_2)\right\}$$

For the case of stationarity and whiteness of the noise $n(t)$, there results:

$$R_{nn}(t_1, t_2) = E\left\{n(t_1)n(t_2)\right\} = \alpha_n^{sat,term}\delta(t_2 - t_1)$$

Stationarity of the noise $n(t)$ implies that the PSD is fixed for all time, while noise whiteness implies that the argument of the delta function is solely a time difference. By using the relationship: $R_{nn}(t_1, t_2) = E\left\{n(t_1)n(t_2)\right\} = \alpha_n^{sat,term}\delta(t_2 - t_1)$, the expression for $\mathbf{Q}_k$ can be simplified, by noting:

$$\int_0^t dt_1 \int_0^t dt_2\ \delta(t_2 - t_1) = t$$

because, for any choice of $t_1$, the inner integral evaluates to unity. Thus, the remaining integral is the integral of unity over an interval of $t$. More rigor can be introduced by considered intervals starting at $0^-$, but the result is essentially the same. As a result,

$$\int_{0^-}^t \delta(t_2 - t_1)dt_1 = 1, \quad \text{when } t_2 \in [0, t)$$

so that,

$$\mathbf{Q}_k^{term,sat} = E\{\mathbf{w}_k \mathbf{w}_k^T\} = \int_0^{T_k} dx \int_0^{T_k} dy \, \Phi(x)\mathbf{b}\mathbf{b}^T \Phi(y) R_{nn}(T_k - x, T_k - y)$$

$$= \alpha_n^{term,sat} \int_0^{T_k} dx \int_0^{T_k} dy \, \Phi(x)\mathbf{b}\mathbf{b}^T \Phi(y) \delta(T_k - x, T_k - y)$$

$$= \alpha_n^{term,sat} \int_0^{T_k} dx \int_0^{T_k} dy \, \Phi(x)\mathbf{b}\mathbf{b}^T \Phi(y) \delta(T_k - x, T_k - y)$$

$$= \alpha_n^{term,sat} \int_0^{T_k} dx \int_0^{T_k} dy \, \Phi(x)\mathbf{b}\mathbf{b}^T \Phi(y) \delta(y - x)$$

$$= \alpha_n^{term,sat} \int_0^{T_k} dx \, \Phi(x)\mathbf{b}\mathbf{b}^T \Phi(x)$$

Then, by substitution,

$$\mathbf{Q}_k^{term,sat} = \alpha_n^{term,sat} \int_0^{T_k} \begin{bmatrix} 1 & 0 & 0 & x \\ 0 & 1 & 0 & x \\ 0 & 0 & 1 & x \\ 0 & 0 & 0 & 1 \end{bmatrix} \begin{bmatrix} 0 \\ 0 \\ 0 \\ 1 \end{bmatrix} \begin{bmatrix} 0 & 0 & 0 & 1 \end{bmatrix} \begin{bmatrix} 1 & 0 & 0 & 0 \\ 0 & 1 & 0 & 0 \\ 0 & 0 & 1 & 0 \\ x & x & x & 1 \end{bmatrix} dx$$

$$= \alpha_n^{term,sat} \int_0^{T_k} \begin{bmatrix} x \\ x \\ x \\ 1 \end{bmatrix} \begin{bmatrix} x & x & x & 1 \end{bmatrix} dx$$

$$= \alpha_n^{term,sat} \int_0^{T_k} \begin{bmatrix} x^2 & x^2 & x^2 & 1 \\ x^2 & x^2 & x^2 & 1 \\ x^2 & x^2 & x^2 & 1 \\ 1 & 1 & 1 & 1 \end{bmatrix} dx$$

$$= \alpha_n^{term,sat} \begin{bmatrix} T_k^3/3 & T_k^3/3 & T_k^3/3 & T_k^2/2 \\ T_k^3/3 & T_k^3/3 & T_k^3/3 & T_k^2/2 \\ T_k^3/3 & T_k^3/3 & T_k^3/3 & T_k^2/2 \\ T_k^2/2 & T_k^2/2 & T_k^2/2 & T_k \end{bmatrix}$$

Thus, the resulting matrix expression for $\mathbf{Q}_k^{term,sat}$ involves powers of the inter-arrival time $T_k$ and a scale factor $\alpha_n^{term,sat}$. The inter-arrival time term $T_k$ always appears in the lower right hand corner of the matrix. The inter-arrival time that is supposed to occur is known a priori; since the actual time of arrival is being tracked, the lower right hand corner of the process noise covariance matrix gives an estimate of $T_k$, which enables every other term in the matrix to be readily derived. In order to select the value of the scale factor $\alpha_n^{term,sat}$, a motion model for the terminal may be run over a prescribed interval (e.g., thirty seconds), as described below, to obtain the variance of the velocity steps, and the deviation of RMS from zero is computed. For example, where the motion model corresponds to a heaving ship, what matters is whether the satellite is located directly over the ship; for the case of a rolling ship, what matters is whether the satellite is located at the horizon. As described below, for the case of a rough sea state, a value on the order of 0.001 may be derived for the scale factor $\alpha_n^{term,sat}$.

### Selection of Discrete Time Pseudo Velocity Noise Variance $(\alpha_n T_k)$

Terminal Motion

Velocity noise is based on worst-case receiver terminal platform motion (azimuth and elevation to satellite, with the receiver terminal being in a rough sea state). The variance of the velocity steps (e.g., the noise causing the random walk) is computed over a prescribed period (e.g., thirty seconds). A Monte Carlo search is used to select "worst case" kinematic conditions for a given application. For a geosynchronous satellite to a submarine based receiver, a value of 0.001, for example, may be selected for $\alpha_n^{term}$.

In the foregoing, acceleration of the satellite is considered to be negligible; moreover, acceleration jumps can be adequately handled by Gaussian statistics.

Satellite Motion

Although the satellite motion term may be considered to be negligible, it is retained for two reasons. The first is for completeness and consistency across all platforms. The second is that when sync hop dropouts occur, for example, for scintillation or true satellite outage, extrapolation over many seconds of the satellite motion is unbounded and may, in some isolated cases, dominate processing noise. As for the case of terminal motion, described above, velocity noise is selected based on worst-case satellite platform motion (azimuth and elevation to satellite, with the terminal in a rough sea state), and the satellite platform motion to a fixed position. The variance of the velocity steps (e.g., the noise causing the random walk) is computed over an interval of thirty seconds. A Monte Carlo search is used to select "worst case" kinematic conditions for a given application. For a geosynchronous satellite to a submarine based receiver, a value of 0.001 was selected for $\alpha_n^{sat}$.

### Hop-Hop Process Noise $\mathbf{Q}_k^{hop-hop}$

This term is introduced by on-board jitter of the transmitting platform. Again, it is retained here for completeness and code standardization. This term only affects the range states, because the effect of hop-hop jitter is merely to alter the effective range. There is no true Doppler caused by this effective (instantaneous) jump in range. Thus, the matrix for this component is of the form shown below. Again, for states that are not active, their associated rows and columns are deleted.

$$\mathbf{Q}_k^{hop-hop} = \begin{bmatrix} \sigma_L^2 & 0 & 0 & 0 \\ 0 & \sigma_M^2 & 0 & 0 \\ 0 & 0 & \sigma_X^2 & 0 \\ 0 & 0 & 0 & 0 \end{bmatrix}$$

For the L source, for example, timing jitter may be bounded by a value of, for example, ten nanoseconds (max) jitter on the satellite, with the maximum timing jitter being a 4-sigma number. The peak-peak group delay in the terminal may be on the order of 0.6 ns (2-sigma). Thus, a 1-sigma timing jitter of approximately 10/4 + 0.6/2 = 3.1 ns results. However, as a conservative estimate, 5.0 ns may be used for the 1-sigma timing jitter. The timing jitter is a white noise discrete time process, so that the variance (e.g., $\sigma^2$) of the timing jitter is simply the square of the computed 1-sigma value.

Similar computations are performed for the M and X signal sources.

**Selection of Discrete Time Pseudo Acceleration Noise Variance** $(\alpha_n T_k)$

Terminal Motion

Acceleration noise is based on worst-case terminal platform motion (azimuth and elevation to satellite, with the receiver terminal being in a rough sea state), and uses a discrete accelerometer measurement. The variance of the acceleration steps (e.g., the noise causing the random walk) is computed over a block of 30 seconds. A Monte Carlo search is used to select "worst case" conditions for a given application. We determined for a geosynchronous satellite to a submarine based receiver, a value of 0.001 was selected for $\alpha_n$.

In the foregoing, acceleration of the satellite is considered to be negligible. Also, acceleration jumps can be adequately modeled by Gaussian statistics.

Satellite Motion

Although the satellite motion term may be considered to be negligible, is retained it for two reasons. The first is for completeness and consistency across all platforms. Second, when sync hop dropouts occur, e.g., in scintillation, or true satellite outage, extrapolation over many seconds of satellite motion is unbounded and may, in some isolated cases, dominate the process noise. Acceleration noise is based on worst-case satellite platform motion (azimuth and elevation to satellite, with the receiver terminal being in a rough sea state) using the STK to a fixed position. The variance of the acceleration steps (e.g., the noise causing the random walk) is computed over a block of thirty seconds. A Monte Carlo search is used to select "worst case" conditions for a given application. For a geosynchronous satellite to a submarine based receiver, a value of 0.001 was selected for $\alpha_n$, as a result of an initial cursory search and preliminary simulations.

Hop-Hop Process Noise Matrix $\mathbf{Q}_k^{hop-hop}$

This term is introduced by the on-board jitter of the transmitting platform. Again, it is retained here for completeness and code standardization. This term only affects the range states, because the effect of hop-hop jitter is merely to alter the effective range. There is no Doppler caused by this effective (instantaneous) jump in range. Thus, the matrix

$\mathbf{Q}_k^{hop-hop}$ for this component is of the form shown below. Again, for states not active, their associated rows and columns are deleted.

$$\mathbf{Q}_k^{hop-hop} = \begin{bmatrix} \sigma_{LDR}^2 & 0 & 0 & 0 \\ 0 & \sigma_{MDR}^2 & 0 & 0 \\ 0 & 0 & \sigma_{XDR}^2 & 0 \\ 0 & 0 & 0 & 0 \end{bmatrix}$$

For the L source, for example, timing jitter may be bounded by a value of, for example, ten nanoseconds (max) jitter on the satellite, with the maximum timing jitter being a 4-sigma number. The peak-peak group delay in the terminal may be on the order of 0.6 ns (2-sigma). Thus, a 1-sigma timing jitter of approximately 10/4 + 0.6/2 = 3.1 ns results. However, as a conservative estimate, 5.0 ns may be used for the 1-sigma timing jitter. The timing jitter is a white noise discrete time process, so that the variance (e.g., $\sigma^2$) of the timing jitter is simply the square of the computed 1-sigma value.

Similar computations are performed for the M and X signal sources.

**Kalman Filter Initialization**

The foregoing description sets forth the derivations for the matrices X, H, R, Q and $\Phi$, as well noise properties for the Kalman filter of the first DTFT module embodiment, namely, everything necessary to sequentially iterate the Kalman filter as data is being received during tracking mode. However, as described previously, prior to iterating the filter in tracking mode, it is necessary to 'seed' the filter, for initiating its operation, the seeding involving providing an initial state estimate, and an initial covariance estimate. The state estimate is supplied at the completion of the acquisition process after turning on the terminal. At this point, there is a very large time uncertainty (e.g., ten milliseconds of uncertainty). As typical in communication systems, the initial acquisition of the signal, while providing coarse time and frequency adjustments is insufficient to allow communication services to begin. However, this coarse adjustment is good enough to initialize the tracking process (e.g., what goes into $\hat{\mathbf{x}}_o^-$). A preferred method for initializing the Kalman filter, so that it may successfully operate in tracking mode, will now be described.

The preferred method for initializing the Kalman filter is to start the tracking process with the state of knowledge provided by the acquisition algorithm, and program the hardware with this value as $\hat{\mathbf{x}}_o$, rather than $\hat{\mathbf{x}}_o$. The initial state error covariance $P_0$ that can be calculated from the PDFs of the acquisition process, assuming a normal distribution. This assumption is valid, even if the PDFs used to calculate the initial covariances are uniform. In practice, any reasonable method to set variances is adequate, as long as the tracking results are useable (i.e., exhibit minimal bias). The $\hat{\mathbf{x}}_o$ is loaded into the hardware and, when the first measurement in tracking is taken, the initial value of $\hat{\mathbf{x}}_o$ is projected forward by the time interval between the successive time indices k=0 and k=1 to the value $\hat{\mathbf{x}}_1^-$, which is the state just as the tracking data is taken at time index k=1.

From the foregoing description, it can be seen that there is a prior PDF for tracking defined by the acquisition algorithm output projected through the time to collect the first tracking measurement. Defining the acquisition algorithm output is considered to be the 'truth', and assigning it as the method to generate the prior PDF is a subjective choice. However, this choice makes practical sense, in that acquisition and tracking are considered to be two separate processes, and in that the acquisition algorithm is highly accurate (due to stringent rules on accepting acquisition of velocity and range), so that the acquisition data is a valid starting point for state initialization of tracking. Using this acquisition data as $\hat{\mathbf{x}}_o$ means that the tracking process begins with data $\mathbf{z}_1$, and the system essentially has no $\mathbf{z}_0$ for tracking. Also, the assumed PDF on $\hat{\mathbf{x}}_o$ (and assuming a Gaussian distribution) means that $\hat{\mathbf{x}}_1^-$ and $\mathbf{P}_1^-$ can be computed (see figure 6A), and the measured elapsed time used to arrive at the first measurement.

Briefly summarizing the foregoing, in accordance with a preferred method for initializing the Kalman filter, the pseudo range state is initialized as the range corresponding to the coarse sync hop's time of arrival from the acquisition process, which is the acquisition window midpoint time plus the time hypothesis offset within the acquisition window. The pseudo velocity state is initialized as the velocity corresponding to the expected velocity from ephemeris processing, plus the velocity offset due to the frequency bin indicating that the coarse sync hop has been acquired.

The initial error covariance matrix is diagonal, and initial state errors are independent. Initial covariance values of range and velocity may be computed, by considering variables as being uniformly distributed over some maximum ranges, and then applying the result, as though the variables are Gaussian-distributed for the Kalman filter. This is acceptable, because the "equivalent" variance of a Gaussian with uniform region of support, mapped to the +/- 4-sigma, yields a variance of $\Delta^2 / 16$, which is smaller than the $\Delta^2 / 3$ used. The errors are overbounded in range selection and variance selection for robustness; while this does not hurt overall performance, a longer pull-in time may result.

The initial pseudo range error covariance term is set as the variance (in range) of a uniform random variable over the support range of set by acquisition knowledge.

$$\int_{-\Delta}^{\Delta} \frac{1}{2\Delta} x^2 \, dx = \frac{1}{6\Delta} x^3 \,\, \Big|_{-\Delta}^{\Delta} = \frac{1}{3} \Delta^2$$

For example $\Delta$ could be a value of +/- 57 m/s, which may be chosen as a maximum value, since this corresponds to a +/- 4 KHz Doppler error, after acquisition. Using this variable as uniformly distributed over a range of [-60 m/s, 60 m/s], for example, then, $\Delta = 60$ in the above, and the initial velocity state covariance is 1200. The initial pseudo acceleration variance value may be selected from a uniform distribution over say +/- 6g m/s$^2$ (where +/-6g over bounds the range of "LOS accelerations" over all meaningful conditions and g=9.8 m/sec-sec). With $\Delta = 6g$ , the result is a covariance of 12g$^2$ or ~1150. Finally, the satellite component of pseudo acceleration may be ignored.

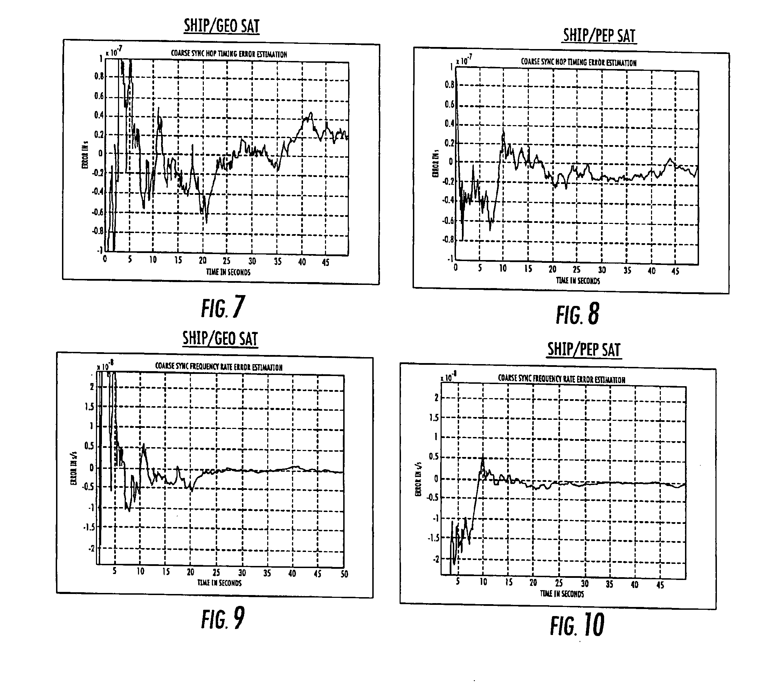

Non-limiting examples of the performance ofthe Kalman filter-based time/frequency tracker (TFT) module of the invention for selected applications are graphically illustrated in Figures 7-11.

In particular, Figure 7 graphically illustrates the convergence of coarse sync hop timing errors, as measured with respect to a geosynchronous satellite from a shipborne receiver terminal employing the Kalman filter-based time/frequency tracker (TFT) module embodiment No. 2, from initially relatively large errors values to near zero, over a relatively brief period of time (less than one minute).

Similarly, Figure 8 graphically illustrates the relatively rapid (on the order of twenty to twenty-five seconds) convergence to zero of coarse sync hop timing errors, as measured with respect to a polar orbit satellite by a shipborne receiver terminal using the TFT module embodiment No. 2, and the same settings as the geosynchronous case exemplified above.

Figure 9 graphically illustrates the convergence of coarse sync hop frequency errors, as measured with respect to a geosynchronous satellite from a shipborne receiver terminal employing the Kalman filter-based time/frequency tracker (TFT) module of embodiment No. 2, of the invention from initially relatively large values to zero, over a relatively brief period of time (on the order of twenty-five seconds).

Figure 10 graphically illustrates the relatively rapid (on the order of fifteen seconds) convergence to zero of coarse sync hop frequency errors, as measured with respect to a polar orbit satellite by a shipborne receiver terminal employing the Kalman filter-based time/frequency tracker (TFT) module embodiment No. 2, and the same settings as the geosynchronous case exemplified above.

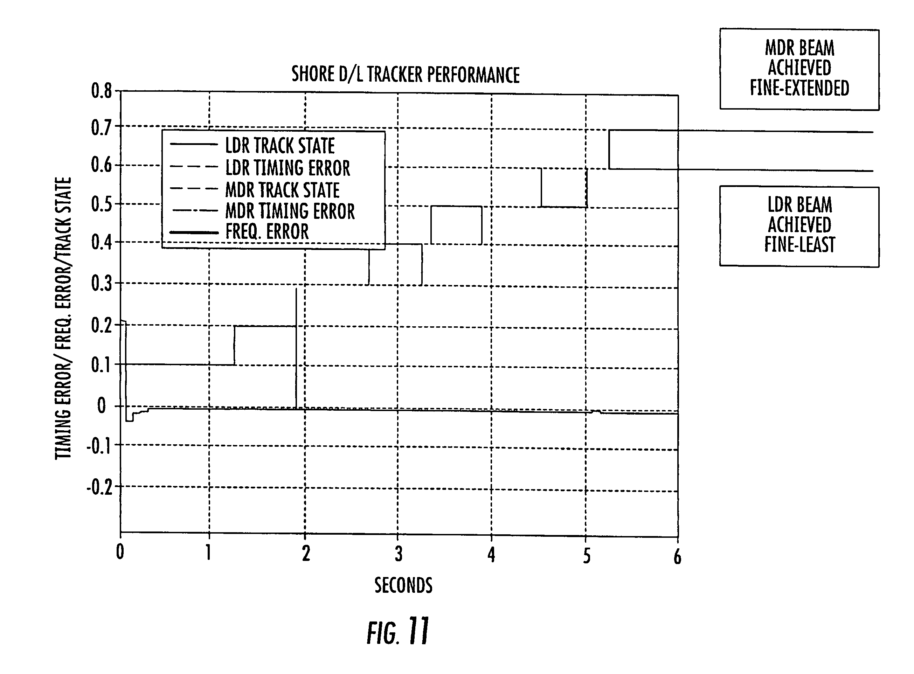

Figure 11 graphically illustrates the improvement, over a very short period of time (just a few seconds), of the time and frequency tracking performance of the embodiment of the Kalman filter-based downlink time/frequency tracker (DTFT) module of embodiment No. 1, for a shore-based receiver terminal simultaneously monitoring the L and M signal sources. For frequency error, the vertical axis is a normalized frequency error normalized to the inverse time hop duration; for time error, normalization factor is the hop duration, and the integer track state (i.e., 1-9 is normalize by the value 10).

In the foregoing, each instantiation of the Kalman filter employed in the embodiments of the TFT modules of the invention has been described as being 'random walk' acceleration-based. However, as an alternative approach, a 'constant' acceleration-based implementation may be successfully employed. To illustrate the essential minor difference between theses two implementations, they are compared as follows.

Considering first, a 'constant' acceleration-based filter implementation, its continuous time acceleration noise-less process representation may be expressed as:

$$j = \dot{a} = 0$$

which indicates that the jerk component is identically zero for all time. By solving this differential equation subject to the initial condition: $a(0) = a_0$, there results:

$$a(t) = a(0) = a_0$$

$$v(t) = v(0) + a(0)\,t = v_0 + a_0 t$$

$$s(t) = s(0) + v(0)t + \frac{1}{2}a(0)t^2 = s_0 + v_0 t + \frac{1}{2}a_0 t^2$$

where velocity and position, as functions of time, have also been calculated, assuming initial conditions on their respective defining differential equations.

Discretizing the above result, at time instants $t = nT_s$, produces:

$$a(nT_s) = a(0) = a_0$$

$$v(nT_s) = v(0) + a(0)\,t = v_0 + a_0(nT_s)$$

$$s(nT_s) = s(0) + v(0)(nT_s) + \frac{1}{2}a(0)(nT_s)^2 = s_0 + v_0(nT_s) + \frac{1}{2}a_0(nT_s)^2$$

If the noise-less constraint is dropped, then the process representation can be expressed as either:

$$j = \dot{a} = \dot{n}(t)$$

or

$$a(t) = a_0 + n(t)$$

where the function $\dot{n}(t)$ is the derivative of the noise process $n(t)$. If the noise process $n(t)$ is band-limited (i.e., is a correlated noise process) by a physical mechanism (where the generation mechanism is only observable, for example, through a band-limiting filter, or the inertia of system responding to white inputs), then the derivative of the noise process $n(t)$ can be defined in the mean-square sense (A. Papoulis, Probability, Random Variables, and Stochastic Processes, 2nd McGraw-Hill, 1984), and the variance of the noise process $n(t)$ is finite (assuming finite PSD). Assuming, for ease of analysis, that the fundamental noise process enters in the acceleration state, as set forth in the expression $a(t) = a_0 + n(t)$, rather than in the jerk state, as in the equation $j = \dot{a} = \dot{n}(t)$, then, the following noisy, constant acceleration is realized:

$$\mathbf{a}(t) = a(0) + \mathbf{n}(t)$$

$$E\{\mathbf{n}(t)\} = 0$$
$$\mathrm{var}\{\mathbf{n}(t)\} = \sigma_n^2$$

$$\therefore \quad E\{\mathbf{a}(t)\} = a(0) = a_0$$
$$E\{a^2(t)\} = a_0^2 + \sigma_n^2$$

In the equation $\mathrm{var}\{\mathbf{n}(t)\} = \sigma_n^2$, only the acceleration state is shown since, by comparison with a similar development, set forth below, of the random walk-based filter, the essential analytical differences are captured by these equations and other results can be similarly realized.

For a 'random' walk acceleration-based filter implementation, its continuous time acceleration process representation is driven by white (Gaussian) noise $j = \dot{a} = w(t)$ as:

$$j = \dot{a} = w(t)$$

This indicates that the jerk component is the white Gaussian random process. To solve this equation, the results from the standard results from stochastic calculus are applicable (A. Jazwinski, Stochastic Processing and Filtering Theory, Academic Press, 1970, Chapter 4) are utilized. The main result employed is the fact that white noise is the formal derivative of Brownian motion (as explained on p. 94 of the Jazwinski Text). Solving the above differential equation, subject to the initial condition: $a(0) = \alpha_0$ and for $t$ strictly greater than zero, produces:

$$a(t) = a(0) = \alpha_0 + q(t), \quad \text{where} \quad q(t) = \int_0^t w(\tau)d\tau$$

$$v(t) = v(0) + a(0)t = v_0 + \alpha_0 t + z(t), \quad \text{where} \quad z(t) = \int_0^t q(\tau)d\tau$$

$$s(t) = s(0) + v(0)t + \frac{1}{2}a(0)t^2 = s_0 + v_0 t + \frac{1}{2}\alpha_0 t^2 + \rho(t), \quad \text{where} \quad \rho(t) = \int_0^t z(\tau)d\tau$$

In the above equations, the integrals exist in the Ito sense (in accordance with the description in the above-referenced Jazwinski Text, Chapter 4), and not in the typical Riemann sense. Velocity and position, as functions of time, have also been calculated, assuming initial conditions on their respective defining differential equations.

Discretizing the above result at time instants $t = nT_s$, the following expressions for acceleration only are used to illustrate the random walk in contrast with the noisy constant-based process, expressed above. Namely,

$$a(0) = a_0 + q(0) = \alpha_0$$

$$a(T_s) = a_0 + q(T_s) = a_0 + q(0) + \int_0^{T_s} w(\tau)d\tau = a(0) + \int_0^{T_s} w(\tau)d\tau$$

$$a(2T_s) = a_0 + q(2T_s) = a_0 + q(T_s) + \int_{T_s}^{2T_s} w(\tau)d\tau = a(T_s) + \int_{T_s}^{2T_s} w(\tau)d\tau$$

$$a(3T_s) = a_0 + q(3T_s) = a_0 + q(2T_s) + \int_{2T_s}^{3T_s} w(\tau)d\tau = a(2T_s) + \int_{2T_s}^{3T_s} w(\tau)d\tau$$

$$\vdots$$

It is important to note for this assumed state evolution process, coupled with an MMSE approach for state estimation (i.e., the Kalman filter), that the noise terms may have to increase when a low sample rate is used, in order to account for process mismatches and the possibility of frequently (relatively) large state jumps, as measured by error residuals in the Kalman Filter. Again, the higher the sample rate, the smaller the residuals will be, in general. It may also be noted that the random walk-based implementation does not exploit correlations of process noise or errors. Exploiting these effects can provide additional performance enhancements in the tracking system. However, the result achievable with the random walk-based filter, while not strictly optimal (in the MMSE sense, considering all possible system choices), provides acceptable performance.

It should also be noted that $q(0)$ has been selected as zero mean, using the assumption on the mean of driving noise process $w(t)$. Additionally considering the acceleration process to start at time $t = 0^-$, and the interval for computing the variance as $[0^-, 0^+]$, then the specialized result (from the above-referenced Jazwinski and Papoulis Texts) of var$\{q(t)\} = \alpha_w t$ yields zero. Another heuristic way to derive this result is to rely upon the fact that the initial condition for the differential equation is given as a fixed constant; hence, no random component exists at $t=0$. Although the random walk-based filter may, at first glance, appear to be nearly identical to the noisy constant approach, this is not the case, as can be seen from a comparison of the above expression $\mathrm{var}\{\mathbf{n}(t)\} = \sigma_\mathbf{n}^2$ for the constant acceleration-based implementation with the expression var$\{\mathbf{q}(t)\}=\alpha_w t$ for the random walk-based implementation, set forth below. Namely,

$$\mathbf{a}(t) = \alpha_0 + \mathbf{q}(t) = a_0 + \mathbf{q}(t)$$

$$E\{\mathbf{q}(t)\} = 0$$
$$\mathrm{var}\{\mathbf{q}(t)\} = \alpha_\mathbf{w}\, t$$

$$\therefore\ E\{\mathbf{a}(t)\} = a(0) = \alpha_0 = a_0$$
$$E\{a^2(t)\} = \alpha_0^2 + \alpha_\mathbf{w}\, t = a_0^2 + \alpha_\mathbf{w}\, t$$

An important difference between the two approaches is the growing variance of the random walk-based implementation. The term $\alpha_w$ is the PSD of the white noise input in continuous time.

As will be appreciated from the foregoing description, the previously discussed inability of a conventional, PLL-based receiver terminal to successfully acquire and track timing and frequency offsets associated with relative motion-based errors between a remote transmit site, such as a satellite, and a downlink receiver terminal, which may be deployed in an essentially static or in a kinematic environment is effectively obviated by means of a new and improved, Kalman filter-based downlink time/frequency tracker module installed in a terrestrial receiver terminal. This module is supplied with timing-error measurement data and maximum likelihood-based fused velocity/frequency measurement data derived from measurements on multiple data rate downlink synchronization hops signals, and data representative of kinematic measurements carried out with respect to the receiver terminal, in order to update the parameters of the Kalman filter within the receiver's Kalman filter-based, time and frequency tracking processor. This use of kinematic domain measurements to augment the time and frequency error-based updating of the Kalman filter enables the tracking processor to initially acquire and thereafter continuously track, with high accuracy, time and frequency variations in one or more hopped synchronization signals that are conveyed within pseudo randomly occurring time slots of one or more downlink beams from the satellite. The Kalman filter is thereby able to achieve synchronization of symbol timing (the sampling clock for the processor's associated analog-to-digital converter) and frequency offsets in a multi-user satellite communication system, so that each downlink signal may be demodulated and data recovered.

## Claims

1. For use with a communication system, wherein a transmitter terminal is operative to transmit a plurality of communication signals from respectively different communication signal sources operating at respectively different data rates, over respective ones of a plurality of communication links toward a receiver terminal,
   a time/frequency tracker, which is installable in said receiver terminal, and is operative to acquire and track time and frequency variations in synchronization signals conveyed over said communication links, so as to synchronize a receiver clock of said receiver terminal with a clock signal embedded in a communication signal from said transmitter terminal, by carrying out timing error and frequency error measurements on said synchronization signals conveyed over said communication links, and wherein characteristics of said time/frequency tracker are updated in accordance with data representative of said timing error and frequency error measurements, and in accordance with data representative of kinematic domain measurements carried out with respect to said receiver terminal.

2. The time/frequency tracker according to claim 1, wherein characteristics of said time/frequency tracker are updated in accordance with data representative of said timing error and frequency error measurements, and in accordance with data representative of kinematic domain measurements carried out with respect to said receiver terminal, irrespective of times at which said data are supplied to said time/frequency tracker.

3. The time/frequency tracker according to claim 1, including a Kalman filter that is operative to generate time and frequency state estimates that are used to control times of transitions in and the frequency of said receiver clock, on the basis of said data representative of said timing error and frequency error measurements and said data representative of kinematic domain measurements carried out with respect to said receiver terminal, so that said receiver clock accurately acquires and tracks the clock that is embedded in a respective communication signal, thereby allowing demodulation and recovery of data therefrom.

4. The time/frequency tracker according to claim 1, wherein said synchronization signals are time- and frequency-hopped synchronization signals.

5. The time/frequency tracker according to claim 4, wherein said time- and frequency-hopped synchronization signals have different data rates and are pseudo-randomly distributed among sequential time slots of frames of multi-time slot communication signals transmitted from said transmitter terminal toward said receiver terminal.

6. The time/frequency tracker according to claim 3, wherein said Kalman filter is operative to produce, at discrete intervals, minimum mean square error (MMSE) estimates of timing and frequency errors in said receiver clock.

7. The time/frequency tracker according to claim 3, wherein said Kalman filter is defined by a continuous time state-space system, having a state vector whose initial and most general case default number of pseudo kinematic variables is sufficient to accommodate the maximum number of variables necessary to characterize a prescribed relationship between said receiver terminal and said respectively different communication signal sources of said transmitter terminal, and wherein the number of pseudo kinematic variables of said state vector is selectively reduced, as necessary, to conform with the actual number of pseudo kinematic variables necessary to characterize said prescribed relationship between said receiver terminal and said respectively different communication signal sources of said transmitter terminal.

8. The time/frequency tracker according to claim 7, wherein said transmitter terminal comprises a satellite containing respectively different communication signal sources, which are operative to downlink output signals having respectively different data rates, said receiver terminal comprises a terrestrial terminal that is operative to monitor said downlink output signals, and wherein a maximum sized state vector includes a respective position-representative pseudo state variable for each of said signal sources, a velocity-representative pseudo state variable for said terrestrial terminal, and an acceleration-representative pseudo state variable for said terrestrial terminal.

9. The time/frequency tracker according to claim 3, wherein said Kalman filter comprises a random walk-based Kalman filter.

10. The time/frequency tracker according to claim 3, wherein said Kalman filter comprises a constant acceleration-based Kalman filter.

FIG. 1
(PRIOR ART)

"UNKNOWN"
BUT POSSIBLY AVAILABLE
FROM EPHEMERIS PROCESSOR

SHORE IS ZERO
SHIP MEASURED
SUB-M INDIRECT MEASUREMENT
SUB-P UNAVAILABLE

$$\ddot{R}'_{LOS} = \ddot{R}'_{SAT} + \ddot{R}'_{TERM}$$

ESTIMATE AVAILABLE FROM TERMINAL
FREQUENCY TRACKER

$$\frac{\dot{R}'_{ERR}}{c} = \frac{v'_{ERR}}{c} = \gamma \iff f_{ERR} = \gamma f_0$$

$$\frac{R'_{ERR}}{c} = \tau_{ERR}$$

FIG. 2

EP 1 838 013 A2

FIG. 2A

EP 1 838 013 A2

FIG. 3

EP 1 838 013 A2

TRACK STATE MANAGER OPERATOR CHARACTERISTIC

EXTRA-FINE RESOURCE CONFIGURED

FINE SYNC RESOURCE CONFIGURED

COARSE SYNC RESOURCE CONFIGURED

TRACK STATE

TIME (FREQUENCY) ERROR LEVEL

FIG. 3A

EP 1 838 013 A2

FIG. 4

NOTE:
1) X,L,M = SYNC HOPS FOR WHICH TIME AND FREQ ERROR MEASUREMENTS AVAILABLE
2) HOPS CAN OCCUR IN ANY COMBINATION OR ORDER WITHIN A SUB-FRAME
3) MULTIPLE HOPS OF SAME TYPE (TYPICALLY L) MAY OCCUR WITHIN A SUB-FRAME

52

$$\Phi_{k-1} \qquad \Phi_k$$

FIG. 5

PROCESS Eqn: $\hat{X}_{k+1} = \Phi_k X_k + W_k$     MEASUREMENT Eqn:     $z_k = H_k X_k + V_k$

A PRIORI CONDITIONS

$E\{w_k\} = 0$
$E\{v_k\} = 0$

$E\{w_k w_i^T\} = \begin{cases} Q_k, & i = k \\ 0, & i \neq k \end{cases}$

$E\{v_k v_i^T\} = \begin{cases} R_k, & i = k \\ 0, & i \neq k \end{cases}$

$E\{v_k w_i^T\} = 0, \quad Vi, k$

FIG. 6

KALMAN PROCESSING CYCLE

FIG. 6A

COMPUTE KALMAN GAIN

$$K_k \, P_k^- \, H_k^T = (H_k \, P_k^- \, H_k^T + R_k)^{-1}$$

DATA AVAILABLE

EXTRAPOLATE

$$\hat{x}_{k+1}^- = \Phi_k \, \hat{x}_k$$

$$P_{k+1}^- = \Phi_k P_k \Phi_k^- \quad Q_k$$

KALMAN UP

NO DATA AVAILABLE

ASSIMILATE MEASUREMENT

$$\hat{x}_k^- = \hat{x}_k^- + K_k \, (z_k - H_k X_k^-)$$

UPDATE COVARIANCE

$$P_k = (I - K_k \, H_k) \, P_k^-$$

k=0

$$\left. \begin{array}{l} P_o \\ \hat{x}_o^0 \end{array} \right\} \text{INITIALIZE}$$

EP 1 838 013 A2

FIG. 8

FIG. 10

FIG. 7

FIG. 9

FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. GARDNER.** Phaselock Techniques. Wiley, 1979
- **H. MEYR ; G. ASCHEID.** Synchronization in Digital Communications. Wiley, 1990, vol. 1
- **P. CHAICHANAVONG ; B. MARCUS ; J. CAMPE-LO DE SOUZA ; R. NEW ; B. WILSON.** Kalman Filtering Applied to Timing Recovery in Tracking Mode'', Website: nd.edu/~mtns/./papers/13997_4.pdf, P. Driessen, ''DPLL Bit Synchronizer with Rapid Acquistion Using Adaptive Kalman Filtering Techniques. *IEEE Trans. On Comm,* September 1994, vol. 42 (9
- **P. CHAICHANAVONG ; B. MARCUS ; J. CAMPE-LO DE SOUZA ; R. NEW ; B. WILSON.** *Kalman Filtering Applied to Timing Recovery in Tracking Mode, nd.edu/~mtns/./papers/13997_4.pdf*
- **SOUSA ; LEITAO.** Carrier Tracking and Symbol Timing in Highly Accelerative Mobile Communications. *Proc. VTS 53rd Vechicular Technology Conference, VTC 2001,* May 2001, vol. 4, 2998-3002
- **R. BROWN ; P. HWANG.** Introduction to Random Signals and Applied Kalman Filtering. Wiley, 1992
- **UMBERTO MENGALI ; M. MORELLI.** Data-Aided Frequency Estimation for Burst Digital Transmission. *IEEE Transactions on Communications,* January 1997, vol. 45 (1), 23-25
- **ALDO N. D'ANDREA ; UMBERTO MENGALI ; MICHELE MORELLI.** Symbol Timing Estimation with CPM Modulation. *IEEE Transactions on Communications,* October 1996, vol. 44 (10), 1362-1372
- **M. MORELLI ; N. D'ANDREA ; U. MENGALI.** Feedforward ML-based timing estimation with PSK signals. *IEEE Communications Letters,* May 1997, vol. 1 (3), 80-82
- **ALDO N. D'ANDREA ; UMBERTO MENGALI ; MICHELE MORELLI.** Symbol Timing Estimation with CPM Modulation. *IEEE . Transactions on Communications,* October 1996, vol. 44 (10), 1362-1372
- **M. MORELLI ; A. N. D'ANDREA ; U. MENGALI.** Feedforward ML-based timing estimation with PSK signals. *IEEE Communications Letters,* May 1997, vol. 1 (3), 80-82
- **A. PAPOULIS.** Probability, Random Variables, and Stochastic Processes. McGraw-Hill, 1984
- **A. JAZWINSKI.** Stochastic Processing and Filtering Theory. Academic Press, 1970